# EUROPÄISCHE PATENTSCHRIFT

(11) **EP 4 100 218 B1**
(45) Veröffentlichungstag und Bekanntmachung des Hinweises auf die Patenterteilung: **06.11.2024**
(21) Anmeldenummer: 21703244.0
(22) Anmeldetag: 02.02.2021
(51) Int. Cl.: B25J 15/00

(54) **ENDEFFEKTOR, ROBOTER, SYSTEM UND VERFAHREN ZUM HANDHABEN VON OBJEKTEN IN EINEM ISOLATOR**
END EFFECTOR, ROBOT, SYSTEM AND METHOD FOR THE HANDLING OF OBJECTS IN AN ISOLATOR
EFFECTEUR TERMINAL, ROBOT, SYSTÈME ET PROCÉDÉ POUR MANIPULER DES OBJETS DANS UN ISOLATEUR

(30) Priorität: 04.02.2020 DE 102020102761
(43) Veröffentlichungstag der Anmeldung: 14.12.2022
(73) Patentinhaber: GRONINGER & CO. GMBH, 74564 Crailsheim (DE)
(72) Erfinder: MERZ, Armin, 73479 Ellwangen (DE); ENGELHARD, Roland, 91589 Aurach-Weinberg (DE); POMMERT, Jens, 74582 Gerabronn (DE)
(74) Vertreter: Witte, Weller & Partner Patentanwälte mbB
(86) Internationale Anmeldenummer: PCT/EP2021/052444
(87) Internationale Veröffentlichungsnummer: WO 2021/156262

(56) Entgegenhaltungen:
- CN-A- 108 214 539
- DE-B3- 102018 203 626
- JP-A- H06 297 370
- JP-A- S5 070 979
- US-B2- 7 789 443
- US-B2- 8 857 875

## Beschreibung

Die vorliegende Erfindung betrifft einen Endeffektor, einen Roboter, ein System und ein Verfahren zum Handhaben von Objekten in einem Isolator.

Derartige Endeffektoren, Roboter, Systeme und Verfahren zum Handhaben von Objekten in einem Isolator sind im Stand der Technik allgemein bekannt.

Beispielsweise können zum Handhaben unterschiedlicher Objekte verschiedene Endeffektoren eingesetzt werden, die zum Handhaben des jeweiligen Objekttyps geeignet sind. Des Weiteren sind auch Endeffektoren bekannt, die zum Handhaben von verschiedenen Objekttypen geeignet sind. Diese Endeffektoren weisen beispielsweise mehrere Werkzeuge oder ein Multifunktionswerkzeug zum Handhaben der verschiedenen Objekttypen auf.

Beispielsweise zeigt die Druckschrift US 2009 / 0223592 A1 Systeme und Verfahren, die das Befüllen von Behältern mit einem Produkt ermöglichen. Ein Füllarm ist in einer Kammer angeordnet. Ein optischer Sensor ist konfiguriert, um Öffnungen der Behälter innerhalb der Kammer zu erfassen. Die Positionen der erfassten Öffnungen werden verwendet, um den Füllarm zum Befüllen der Behälter mit einem Produkt zu führen.

Des Weiteren zeigt die Druckschrift EP 2 733 196 A1 ein Flüssigkeitsverarbeitungssystem zum Verarbeiten von flüssigem biologischem Material. Das Flüssigkeitsverarbeitungssystem umfasst: einen Rumpf, der um eine Achse drehbar vorgesehen ist, innerhalb eines vorbestimmten Arbeitsraums; einen ersten Arm, der am Rumpf vorgesehen ist und drei Freiheitsgrade oder höhere Freiheitsgrade aufweist; einen zweiten Arm, der an dem Rumpf vorgesehen ist und drei Freiheitsgrade oder höhere Freiheitsgrade aufweist; Antriebsmittel, die konfiguriert sind, um jeden von dem Rumpf, dem ersten Arm und dem zweiten Arm anzutreiben; physiochemische Ausrüstung, die innerhalb des Arbeitsraums und innerhalb des Bewegungsbereichs von zumindest einem von dem ersten Arm und dem zweiten Arm angeordnet sind; wobei die Antriebsmittel durch Lehrabspielen basierend auf den Positionen und Formen der physiochemischen Ausrüstung betrieben werden und das biologische Material unter Verwendung der physiochemischen Ausrüstung verarbeitet wird.

Des Weiteren zeigt die Druckschrift US 7 789 443 B2 einen Greifer zur Verwendung mit einem Roboter. Der Greifer umfasst einen Stützkörper zum lösbaren Anbringen des Greifers an einem beweglichen Arm und einen Werkstückkontaktkörper mit einer Nut, die sich entlang mindestens eines Abschnitts des Kontaktkörpers erstreckt, um mit einer gekrümmten Außenkante des Werkstücks in Eingriff zu kommen. Ein Kopplungselement verbindet den Stützkörper mit dem Werkstückkontaktelement und weist eine Biegekomponente auf, die sich biegt, um eine radiale und/oder tangentiale relative Bewegung des Werkstückkontaktkörpers in Bezug auf den Stützkörper zu ermöglichen, um einen Schlupf zwischen dem Werkstück und dem Kontaktkörper zu verringern, wenn der Greifer mit dem Werkstück in Eingriff kommt.

Des Weiteren zeigt die Druckschrift US 8 857 875 B2 einen Roboter, der einen Roboterarm umfasst. Eine Roboterhand ist an einem distalen Ende des Roboterarms angeordnet und greift ein Objekt. Die Roboterhand umfasst eine Luftspannvorrichtung, die ein Paar Kolben und einen Luftzylinder umfasst. Der Luftzylinder öffnet und schließt die Kolben parallel zueinander. Ein Paar erster Greifelemente ist an einer ersten Seite der Kolben angeordnet und bewegt sich innerhalb eines ersten beweglichen Bereichs auf einer beweglichen Ebene nahe aneinander und voneinander weg. Ein Paar zweiter Greifelemente ist an einer zweiten Seite der Kolben angeordnet und bewegt sich innerhalb eines zweiten beweglichen Bereichs, der sich von dem ersten beweglichen Bereich auf der beweglichen Ebene unterscheidet, nahe zueinander und auseinander. Die Roboterhand schwenkt relativ zu dem distalen Ende des Roboterarms um eine Schwenkachse, die ungefähr senkrecht zu der beweglichen Ebene ist.

Die bekannten Endeffektoren, Roboter, Systeme und Verfahren zum Handhaben von Objekten in einem Isolator lassen aber noch Raum für Verbesserungen.

Es ist daher eine Aufgabe der vorliegenden Erfindung, einen verbesserten Endeffektor, einen verbesserten Roboter, ein verbessertes System und ein verbessertes Verfahren zum Handhaben von Objekten in einem Isolator bereitzustellen.

Des Weiteren ist es eine Aufgabe der vorliegenden Erfindung, verschiedene Objekte innerhalb eines Isolators auf möglichst einfache Art und Weise zu handhaben.

Des Weiteren ist es eine Aufgabe der vorliegenden Erfindung, einen Endeffektor zum Handhaben von Objekten in einem Isolator bereitzustellen, der einen möglichst einfachen Aufbau hat und möglichst einfach zu steuern und zu fertigen ist.

Gemäß einem ersten Aspekt der vorliegenden Erfindung ist ein Endeffektor zum Handhaben von Objekten in einem Isolator bereitgestellt. Der Endeffektor weist eine erste Aufnahme für ein erstes Objekt, eine zweite Aufnahme für ein zweites Objekt, und ein erstes Verlagerungselement auf, wobei die Aufnahmen in einer Längsrichtung auf entgegengesetzten Seiten des Endeffektors angeordnet sind, wobei jede Aufnahme zwischen einer Aufnahmestellung, in der das jeweilige Objekt in die entsprechende Aufnahme aufgenommen werden kann, und einer Greifstellung, in der das jeweilige Objekt mit der entsprechenden Aufnahme gegriffen werden kann, verlagerbar ist, wobei jede Aufnahme einen ersten Greifabschnitt aufweist, wobei der erste Greifabschnitt der ersten Aufnahme an einem ersten Ende des Verlagerungselements und der erste Greifabschnitt der zweiten Aufnahme an einem entgegengesetzten, zweiten Ende des Verlagerungselements angeordnet ist, wobei das Verlagerungselement derart verlagerbar ist, dass die erste Aufnahme und die zweite Aufnahme jeweils zwischen der Aufnahmestellung und der Greifstellung verlagert werden können. Der Endeffektor weist zwei erste Aufnahmen und zwei Verlagerungselemente auf, wobei an dem ersten Ende jedes Verlagerungselements der erste Greifabschnitt jeweils einer der ersten Aufnahmen angeordnet ist, wobei an den zweiten, entgegengesetzten Enden der Verlagerungselemente jeweils der erste und der zweite Greifabschnitt der zweiten Aufnahme angeordnet sind.

Gemäß einem zweiten Aspekt der vorliegenden Erfindung ist ein Roboter zum Handhaben von Objekten in einem Isolator bereitgestellt, wobei der Roboter einen Endeffektor nach dem ersten Aspekt der Erfindung aufweist.

Gemäß einem dritten Aspekt der vorliegenden Erfindung ist ein System mit einem Isolator und einem in dem Isolator angeordneten Roboter nach dem zweiten Aspekt der Erfindung bereitgestellt.

Gemäß einem vierten Aspekt der vorliegenden Erfindung Verfahren zum Handhaben von Objekten in einem Isolator bereitgetsellt, wobei in dem Isolator ein Roboter mit einem Endeffektor angeordnet ist, wobei der Endeffektor eine erste Aufnahme für ein erstes Objekt, eine zweite Aufnahme für ein zweites Objekt, und ein erstes Verlagerungselement aufweist, wobei die Aufnahmen in einer Längsrichtung auf entgegengesetzten Seiten des Endeffektors angeordnet sind, wobei jede Aufnahme einen ersten Greifabschnitt aufweist, wobei der erste Greifabschnitt der ersten Aufnahme an einem ersten Ende des Verlagerungselements und der erste Greifabschnitt der zweiten Aufnahme an einem entgegengesetzten, zweiten Ende des Verlagerungselements angeordnet ist, wobei das Verlagerungselement verlagerbar ist, wobei der Endeffektor zwei erste Aufnahmen und zwei Verlagerungselemente aufweist, wobei an dem ersten Ende jedes Verlagerungselements der erste Greifabschnitt jeweils einer der ersten Aufnahmen angeordnet ist, wobei an den zweiten, entgegengesetzten Enden der Verlagerungselemente jeweils der erste und der zweite Greifabschnitt der zweiten Aufnahme angeordnet sind, wobei das Verfahren die folgenden Schritte aufweist:
- Anordnen der ersten Aufnahme oder der zweiten Aufnahme in einer Aufnahmestellung, in der das erste Objekt oder das zweite Objekt in der entsprechenden Aufnahme aufgenommen werden kann;
- Aufnehmen des jeweiligen Objekts in der entsprechenden Aufnahme; und
- Greifen des jeweiligen Objekts, indem das Verlagerungselement derart verlagert wird, dass die entsprechende Aufnahme von der Aufnahmestellung in eine Greifstellung verlagert wird, in der das jeweilige Objekt gegriffen werden kann.

Die zu handhabenden Objekte können beispielsweise Vials, Karpulen, Flaschen, Spritzen, Zylinderampullen, Füllnadeln, ein Füllnadelhalter, Petrischalen, Agar-Platten und/oder dergleichen sein. Das erste Objekt ist vorzugsweise ein Vial, eine Flasche, eine Spritze, eine Zylinderampullen, Füllnadeln oder ein Füllnadelhalter, insbesondere ein greifbarer Vorsprung eines Füllnadelhalters, sein. Das zweite Objekt ist vorzugsweise eine Petrischale oder eine Agar-Platte.

Unter dem Begriff "Isolator" ist allgemein ein Behälter zu verstehen, der gegenüber dem umgebenden Arbeitsraum hermetisch und gasdicht abgeschlossen ist. Innerhalb eines Isolators kann eine definierte Atmosphäre zur Bearbeitung empfindlicher oder gefährlicher Produkte erzeugt werden. Der Isolator kann vorzugsweise ein aseptischen Isolator sein, der vorzugsweise einen Füllbereich zum fluiden Befüllen von Objekten (z.B. Vials, Karpulen, Fläschchen, Spritzen und/oder dergleichen) mittels Füllnadeln aufweist.

Jede Aufnahme weist eine Aufnahmestellung und eine Greifstellung auf und ist zwischen diesen Stellungen verlagerbar. In der Aufnahmestellung ist jede Aufnahme so weit geöffnet, dass die Aufnahme ein entsprechendes Objekt aufnehmen kann. In anderen Worten ist die Aufnahme dabei soweit geöffnet, dass das entsprechende Objekt in die Aufnahme eingebracht werden kann. Die Aufnahmestellung kann somit auch als offene oder geöffnete Stellung bezeichnet werden. In der Greifstellung ist die Aufnahme so weit geschlossen, dass das entsprechende Objekt durch die Aufnahme gegriffen wird. Unter "Greifen" ist hierbei zu verstehen, dass das Objekt in der Aufnahme geklemmt bzw. gehalten ist. Die Greifstellung kann somit auch als geschlossene Stellung bezeichnet werden.

Das erste Verlagerungselement ist verlagerbar. Dies bedeutet, dass das erste Verlagerungselement relativ zu anderen Komponenten des Endeffektors bewegbar ist. In anderen Worten ist das erste Verlagerungselement an dem Endeffektor verlagerbar angeordnet.

Des Weiteren koppelt das erste Verlagerungselement die Verlagerung der ersten und zweiten Aufnahme. Dazu erstreckt sich das erste Verlagerungselement von der ersten Aufnahme bis zur zweiten Aufnahme und bildet an seinen Enden die entsprechenden ersten Greifabschnitte der Aufnahmen aus. Wird das erste Verlagerungselement verlagert, so werden auch die Greifabschnitte an den Enden des ersten Verlagerungselements verlagert, so dass die Aufnahmen entweder weiter geöffnet oder weiter geschlossen werden. Dadurch werden auch die Aufnahmen zwischen der Greifstellung und der Aufnahmestellung verlagert.

Der Endeffektor ist somit als Multifunktionswerkzeug ausgebildet, das zwei Aufnahmen aufweist, mit denen verschiedene Objekte gehandhabt werden können. Durch das verlagern des Verlagerungselements können beide Aufnahmen gleichzeitig verlagert werden. Dadurch ist nur ein Antriebsmittel für das Verlagerungselement erforderlich um beide Aufnahmen zu verlagern.

Der Endeffektor weist zwei erste Aufnahmen und zwei Verlagerungselemente auf, wobei an dem ersten Ende jedes Verlagerungselements der erste Greifabschnitt jeweils einer der ersten Aufnahmen angeordnet ist, wobei an den zweiten, entgegengesetzten Enden der Verlagerungselemente jeweils der erste und der zweite Greifabschnitt der zweiten Aufnahme angeordnet sind. Auf diese Weise können mit den ersten Aufnahmen zwei erste Objekte gleichzeitig gegriffen werden. Dies ist insbesondere dann von Vorteil, wenn kleinere erste Objekte, beispielsweise mehrere Vials, Behälter, Füllnadeln und dergleichen, im Isolator gleichzeigt gehandhabt werden sollen. Die zweite Aufnahme ist vorzugsweise zum Handhaben von größeren Objekten ausgebildet, wie beispielsweise Petrischalen oder Agar-Platten die in der Regel einzeln gehandhabt werden.

Der Roboter ist dazu ausgebildet, den Endeffektor im Isolator zu bewegen und auszurichten. Beispielsweise kann im Isolator ein erstes zu handhabendes Objekt angeordnet sein. Die erste Aufnahme in die Aufnahmestellung verlagert bzw. angeordnet werden. Dann kann der Roboter den Endeffektor im Isolator zu der Position des Objekts bewegen. Insbesondere kann der Endeffektor so bewegt werden, dass das erste Objekt in die erste Aufnahme aufgenommen wird. Ist das erste Objekt in der Aufnahme angeordnet, kann die erste Aufnahme in die Greifstellung verlagert werden, um das Objekt zu greifen. Der Roboter kann dann den Endeffektor im Isolator weiter bewegen, wodurch das in der ersten Aufnahme gegriffene erste Objekt im Raum transferiert werden kann. Zum Freigeben des ersten Objekts wird die erste Aufnahme wieder in die Aufnahmestellung verlagert. Entsprechend kann auch das zweite Objekt in der zweiten Aufnahme aufgenommen, gegriffen, transferiert und wieder freigegeben werden.

Der erfindungsgemäße Endeffektor ermöglicht somit, verschiedene Objekte innerhalb eines Isolators auf möglichst einfache Art und Weise zu handhaben. Zudem weist der erfindungsgemäße Endeffektor einen einfachen Aufbau hat und ist einfach zu steuern und zu fertigen.

Die eingangs gestellte Aufgabe wird somit vollumfänglich gelöst.

In einer ersten Ausgestaltung ist das Verlagerungselement derart verlagerbar, dass, wenn die erste Aufnahme in der Aufnahmestellung angeordnet ist, die zweite Aufnahme in der Greifstellung angeordnet ist und, wenn die zweite Aufnahme in der Aufnahmestellung angeordnet ist, die erste Aufnahme in der Greifstellung angeordnet ist.

Dabei werden die erste Aufnahme und die zweite Aufnahme im Wechsel zwischen der Aufnahmestellung und der Greifstellung verlagert. Dazu wird das Verlagerungselement derart verlagert, dass beim Verlagern die eine Aufnahme weiter geöffnet wird, während die andere Aufnahme weiter geschlossen wird.

In einer weiteren Ausgestaltung ist das Verlagerungselement derart verlagerbar, dass, wenn die erste Aufnahme in der Aufnahmestellung angeordnet ist, die zweite Aufnahme in der Aufnahmestellung angeordnet ist und, wenn die zweite Aufnahme in der Greifstellung angeordnet ist, die erste Aufnahme in der Greifstellung angeordnet ist.

Dabei werden die erste Aufnahme und die zweite Aufnahme zusammen zwischen der Aufnahmestellung und der Greifstellung verlagert. Dazu wird das Verlagerungselement derart verlagert, dass beim Verlagern beide Aufnahmen entweder weiter geöffnet oder weiter geschlossen werden.

In einer weiteren Ausgestaltung weist jede Aufnahme einen zweiten Greifabschnitt auf, wobei der erste und der zweite Greifabschnitt in einer Querrichtung gegenüberliegend angeordnet sind.

Der erste und der zweite Greifabschnitt bilden somit zwei Seiten der Aufnahme aus, zwischen denen das entsprechende Objekt in der Greifstellung gegriffen bzw. geklemmt wird. Die Längsrichtung kann insbesondere im Wesentlichen senkrecht zur Querrichtung angeordnet sein.

In einer weiteren Ausgestaltung ist der Abstand zwischen dem ersten und dem zweiten Greifabschnitt in der Aufnahmestellung so groß ist, dass das entsprechende Objekt zwischen den Greifabschnitten aufgenommen werden kann.

In anderen Worten kann das entsprechende Objekt in der Aufnahmestellung in die Aufnahme eingebracht bzw. aus der Aufnahme herausgenommen oder herausgeführt werden.

In einer weiteren Ausgestaltung ist der Abstand zwischen dem ersten und dem zweiten Greifabschnitt in der Greifstellung so klein ist, dass das entsprechende Objekt zwischen den Greifabschnitten gegriffen werden kann.

In anderen Worten wird das entsprechende Objekt in der Greifstellung dadurch gegriffen, dass die Greifabschnitte so weit zueinander bewegt werden, dass diese an dem Objekt anliegen und dieses zwischen sich klemmen bzw. halten.

In einer weiteren Ausgestaltung ist das Verlagerungselement translatorisch oder rotatorisch verlagerbar.

"Translatorisch" bedeutet, dass das Verlagerungselement relativ zu den anderen Komponenten des Endeffektors verschoben werden kann. In anderen Worten ist unter "translatorischem Verlagern" zu verstehen, dass das Verlagerungselement im Raum versetzt wird ohne sein Orientierung im Raum zu ändern. "Rotatorisch" bedeutet, dass das Verlagerungselement relativ zu den anderen Komponenten des Endeffektors gedreht wird. In anderen Worten ist unter "rotatorischem Verlagern" zu verstehen, dass das Verlagerungselement im Raum um eine Achse gedreht wird, sodass sich seine Orientierung bezüglich der anderen Komponenten des Endeffektors ändert.

In einer weiteren Ausgestaltung ist das Verlagerungselement in der Querrichtung verschiebbar.

Wird das Verlagerungselement in der Querrichtung verlagert, so ändert sich der Abstand zwischen dem ersten und dem zweiten Greifabschnitt. Dadurch wird jede Aufnahme entweder weiter geöffnet oder weiter geschlossen. In anderen Worten kann durch ein Verlagern des Verlagerungselements in der Querrichtung jede Aufnahmen entweder in die Aufnahmestellung oder in die Greifstellung verlagert werden.

In einer weiteren Ausgestaltung ist das Verlagerungselement um eine erste Drehachse drehbar gelagert, wobei die erste Drehachse senkrecht zu der Längsrichtung und der Querrichtung angeordnet ist. Die erste Drehachse kann insbesondere zwischen dem ersten und zweiten Ende angeordnet sein.

Wird das Verlagerungselement um die erste Drehachse gedreht, so werden die Enden des Verlagerungselements im Wesentlichen in der Querrichtung verlagert. Dadurch wird jede Aufnahme entweder weiter geöffnet oder weiter geschlossen. In anderen Worten kann durch ein Drehen des Verlagerungselements um die erste Drehachse jede Aufnahmen entweder in die Aufnahmestellung oder in die Greifstellung verlagert werden.

In einer weiteren Ausgestaltung weist der Endeffektor des Weiteren für mindestens eine der Aufnahmen ein Lagerelement auf, wobei der zweite Greifabschnitt der jeweiligen Aufnahme an einem Ende des Lagerelements angeordnet ist.

Das Lagerelement und das Verlagerungselement sind somit in der Querrichtung auf gegenüberliegenden Seiten. Insbesondere kann für jede Aufnahme ein entsprechendes Lagerelement vorgesehen sein, das den entsprechenden zweiten Greifabschnitt ausbildet.

In einer weiteren Ausgestaltung weisen das Verlagerungselement und das Lagerelement an den entsprechenden Enden jeweils eine Aussparung auf, wobei die Aussparungen die entsprechenden Greifabschnitte ausbilden.

In der Greifstellung ragt das jeweilige Objekt somit teilweise in die Aussparung hinein. Ein Abstand der Greifabschnitte an der Öffnung der Aufnahme ist somit kleiner als ein Durchmesser des Objekts. Dadurch wird verhindert, dass das Objekt in der Greifstellung aus der Aufnahme herauskommen kann. Zudem liegt das Objekt an mindestens zwei Punkten an jedem als Aussparung ausgebildeten Greifabschnitt an. Die Aussparungen ermöglichen somit eine Selbstzentrierung des Objekts und einen sicheren Halt an den Greifabschnitten.

In einer weiteren Ausgestaltung ist das Lagerelement starr oder beweglich an dem Endeffektor angeordnet.

Um das Lagerelement starr an dem Endeffektor anzuordnen, kann das Lagerelement fest an dem Endeffektor befestigt sein. Um das Lagerelement beweglich an dem Endeffektor anzuordnen, kann das Lagerelement entweder in der Querrichtung verschiebbar oder um eine zweite Drehachse drehbar gelagert sein, wobei die zweite Drehachse parallel zu der ersten Drehachse angeordnet ist.

In einer weiteren Ausgestaltung ist das Lagerelement, insbesondere translatorisch oder rotatorisch, verlagerbar, wobei eine Bewegung des Lagerelements mit der Bewegung des Verlagerungselements gekoppelt ist, so dass beim Verlagern von der Aufnahmestellung in die Greifstellung die Greifanschnitte aufeinander zu bewegt werden und beim Verlagern von der Greifstellung in die Aufnahmestellung die Greifanschnitte voneinander weg bewegt werden.

Durch die Kopplung der Bewegung des Lagerelements und des Verlagerungselements können die Greifabschnitte einer Aufnahme aufeinander zu bzw. voneinander weg bewegt werden. Dadurch können die Objekte besonders gut gegriffen und anschließend wieder freigegeben werden.

In einer weiteren Ausgestaltung weist der Endeffektor des Weiteren eine Antriebseinrichtung zum Verlagern des Verlagerungselements auf.

Auf diese Weise kann das Verlagerungselement mittels der Antriebseinrichtung automatisiert verlagert werden. Die Antriebseinrichtung kann beispielsweise über eine Steuerungseinrichtung gesteuert werden. Die Steuerungseinrichtung kann dazu beispielsweise Steuersignale an die Antriebseinrichtung übermitteln.

In einer weiteren Ausgestaltung ist die Antriebseinrichtung dazu ausgebildet, das Verlagerungselement in der Querrichtung zu verschieben oder das Verlagerungselement um die erste Drehachse zu Drehen.

Wenn das Verlagerungselement translatorisch verlagerbar ist, kann die Antriebseinrichtung das Verlagerungselement in der Querrichtung verschieben. Wenn das Verlagerungselement rotatorisch verlagerbar ist, kann die Antriebseinrichtung das Verlagerungselement um die entsprechende erste Drehachse drehen. Dadurch wird jede Aufnahme zwischen der Aufnahmestellung und der Greifstellung verlagert.

In einer weiteren Ausgestaltung ist das Verlagerungselement mittels eines ersten Kopplungselements an dem Endeffektor um die erste Drehachse drehbar gelagert, wobei das erste Kopplungselement einen Zahnungsabschnitt aufweist, wobei die Antriebseinrichtung eine Antriebswelle aufweist, die mit dem Zahnungsabschnitt in Eingriff ist.

Auf diese Weise kann die Antriebseinrichtung das Verlagerungselement rotatorisch verlagern. Das erste Kopplungselement ist dabei drehfest mit dem Verlagerungselement verbunden, so dass das erste Kopplungselement und das Verlagerungselement sich gemeinsam um die erste Drehachse drehen. Wenn die Antriebswelle um eine Längsachse gedreht wird, werden das erste Kopplungselement und das Verlagerungselement um die erste Drehachse gedreht. Die Antriebswelle weist eine Längsachse auf. Die Längsachse kann beispielsweise parallel oder senkrecht zu der ersten Drehachse angeordnet sein kann.

Insbesondere kann der erste Zahnungsabschnitt Zähne aufweisen, die in einer Umfangsrichtung um die erste Drehachse verteilt sind, wobei die Antriebswelle ein Gewinde aufweist, das mit den Zähnen des ersten Zahnungsabschnitts in Eingriff ist. Dabei ist die Längsachse der Antriebswelle senkrecht zu der ersten Drehachse angeordnet. Beispielsweise kann die Längsachse der Antriebswelle parallel zu der Längsrichtung angeordnet sein.

In einer weiteren Ausgestaltung ist das Lagerelement mittels eines zweiten Kopplungselements an dem Endeffektor um die zweite Drehachse drehbar gelagert, wobei das zweite Kopplungselement in einem zweiten Zahnungsabschnitt aufweist, wobei die Antriebswelle dem zweiten Zahnungsbereich in Eingriff ist.

Auf diese Weise kann die Antriebseinrichtung das Lagerelement rotatorisch verlagern. Das zweite Kopplungselement ist dabei drehfest mit dem Lagerelement verbunden, so dass das zweite Kopplungselement und das Lagerelement sich gemeinsam um die zweite Drehachse drehen. Wenn die Antriebswelle um eine Längsachse gedreht wird, werden das zweite Kopplungselement und das Lagerelement um die zweite Drehachse gedreht. Da das erste Kopplungselement und das zweite Kopplungselement mit Antriebswelle in Eingriff stehen, werden bei einer Drehung der Antriebswelle sowohl das erste Kopplungselement als auch das zweite Kopplungselement um die erste bzw. zweite Drehachse gedreht. Dadurch sind die Drehbewegungen des Verlagerungselements und des Lagerelements miteinander gekoppelt. Insbesondere ist die Antriebswelle zwischen dem ersten und dem zweiten Kopplungselement angeordnet. Dadurch werden das erste Kopplungselement und das zweite Kopplungselement in entgegengesetzten Drehrichtungen gedreht, so dass die Greifabschnitte einer Aufnahme, deren zweiten Greifabschnitt das Lagerelement aufweist, aufeinander zu bzw. voneinander weg bewegt werden.

Insbesondere kann der zweite Zahnungsabschnitt Zähne aufweisen, die in einer Umfangsrichtung um die zweite Drehachse verteilt sind, wobei das Gewinde der Antriebswelle mit den Zähnen des zweiten Zahnungsabschnitts in Eingriff ist.

In einer weiteren Ausgestaltung weist der Endeffektor für jede erste Aufnahme jeweils ein Lagerelement auf, wobei der zweite Greifabschnitt der jeweiligen Aufnahme an einem Ende des entsprechenden Lagerelements angeordnet ist.

Die Lagerelemente können dabei wieder beweglich ausgebildet sein, wobei eine Bewegung jedes Lagerelements mit der Bewegung des entsprechenden Verlagerungselements gekoppelt ist, so dass beim Verlagern jeder Aufnahme die Greifanschnitte aufeinander zu bzw. voneinander weg bewegt werden.

In einer weiteren Ausgestaltung weist der Endeffektor je eine Antriebseinrichtung zum Verlagern jeweils eines der Verlagerungselemente auf.

Jede Antriebseinrichtung verlagert somit ein entsprechendes Verlagerungselement translatorisch oder rotatorisch. Auf diese Wiese können drei Aufnahmen gleichzeitig zwischen einer Aufnahmestellung und einer Greifstellung mittels zweier Antriebseinrichtungen verlagert werden.

In einer weiteren Ausgestaltung weist der Endeffektor mindestens ein Federelement aufweist, das derart angeordnet ist, dass es die erste Aufnahme und/oder die zweite Aufnahme in die Greifstellung vorspannt.

Auf diese Weise kann zumindest eine Aufnahme in die Greifstellung vorgespannt werden. Die in die Greifstellung vorgespannte Aufnahme, ist dann entgegen der durch das Federelement wirkenden Vorspannung, in die Aufnahmestellung zu verlagern, um ein Objekt darin aufzunehmen. Im Fall, dass es zu einem Stromausfall kommt, während in dieser Aufnahme ein Objekt gegriffen und gehandhabt wird, verbleibt die Aufnahme durch die Vorspannung des Federelements in der Greifstellung. Dadurch wird verhindert, dass sich die Aufnahme bei einem Stromausfall öffnet und das zu handhabende Objekt aus der Aufnahme herausfällt.

In einer weiteren Ausgestaltung weist der Roboter eine, insbesondere gelenkige, Trägerstruktur zum Tragen des Endeffektors auf.

Die Trägerstruktur kann beispielsweise mehrere Arme aufweisen, die über Gelenke miteinander gekoppelt sind. Die Trägerstruktur des Roboters kann derart beweglich ausgebildet sein, dass der Endeffektor im Isolator mittels des Roboters bewegt werden kann. Zum Bewegen der Trägerstruktur kann der Roboter ebenfalls Antriebseinrichtungen aufweisen.

In einer weiteren Ausgestaltung ist der Endeffektor an einem Ende der Trägerstruktur drehbar gelagert.

Auf diese Weise kann können die Aufnahmen des Endeffektors im Isolator bezüglich der aufzunehmenden Objekte ausgerichtet werden. Zum Drehen des Endeffektors kann der Roboter ebenfalls eine weitere Antriebseinrichtung aufweisen.

In einer weiteren Ausgestaltung weist das System eine Steuerungseinrichtung auf, die dazu ausgebildet ist, die Bewegung des Endeffektors zu steuern.

Die Steuerungseinrichtung kann beispielsweise mindestens eine Antriebseinrichtung des Endeffektors steuern, um die Aufnahmen zwischen der Aufnahmestellung und der Greifstellung zu verlagern. Dazu kann die Steuerungseinrichtung beispielsweise Steuersignale an die Antriebseinrichtungen des Endeffektors senden. Des Weiteren kann die Steuerungseinrichtung den Roboter steuern um den Endeffektor in dem Isolator zu bewegen und auszurichten. Dazu kann die Steuerungseinrichtung beispielsweise Steuersignale an die entsprechenden Antriebseinrichtungen des Roboters senden.

In einer weiteren Ausgestaltung weist das System eine Sensoreinrichtung auf, die dazu ausgebildet ist, die Position und Ausrichtung des Endeffektors und der Objekte in dem Isolator zu detektieren, wobei die Sensoreinrichtung Sensorsignale an die Steuerungseinrichtung sendet, wobei die Steuerungseinrichtung dazu ausgebildet ist den Roboter und den Endeffektor auf Basis des Sensorsignals zu steuern.

In einer weiteren Ausgestaltung weist das Verfahren des Weiteren den folgenden Schritt auf:
- Handhaben des jeweiligen Objekts, indem der Endeffektor mittels des Roboters im Isolator bewegt wird, während das jeweilige Objekt gegriffen ist.

Unter Handhaben ist zu verstehen, dass der Roboter den Endeffektor und somit auch das jeweilige gegriffene Objekt im Isolator bewegt, um damit das jeweilige gegriffene Objekt im Isolator zu positionieren und auszurichten. Beispielsweise kann der Roboter dabei derart gesteuert werden, dass er den Endeffektor derart bewegt, dass das jeweilige Objekt zu einer Zielposition transferiert wird.

In einer weiteren Ausgestaltung weist das Verfahren des Weiteren den folgenden Schritt auf:
- Freigeben des jeweiligen Objekts, indem die Verlagerungselemente derart verlagert werden, dass die entsprechende Aufnahme in die Aufnahmestellung verlagert wird.

Sobald das jeweilige Objekt in der entsprechenden Aufnahme gegriffen worden ist, kann das Objekt mittels des Roboters im Isolator transferiert werden. Nachdem das Objekt seine Zielposition erreicht hat, kann durch ein entsprechendes Verlagern des Verlagerungselements kann das jeweilige Objekt wieder freigegeben werden.

Es versteht sich, das die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in den Zeichnungen 1B, 2B, 3B, 4B sowie 5-15 dargestellt und werden in der nachfolgenden Beschreibung näher erläutert. Zeichnungen 1A, 2A, 3A und 4A zeigen Beispiele aus dem Stand der Technik . Es zeigen:
- Fig. 1A: eine schematische Ansicht einer ersten Ausführungsform eines Endeffektors;
- Fig. 1 B: eine schematische Ansicht einer zweiten Ausführungsform eines Endeffektors;
- Fig. 2A: eine schematische Ansicht einer dritten Ausführungsform eines Endeffektors;
- Fig. 2B: eine schematische Ansicht einer vierten Ausführungsform eines Endeffektors;
- Fig. 3A: eine schematische Ansicht einer fünften Ausführungsform eines Endeffektors;
- Fig. 3B: eine schematische Ansicht einer sechsten Ausführungsform eines Endeffektors;
- Fig. 4A: eine schematische Ansicht einer siebten Ausführungsform eines Endeffektors;
- Fig. 4B: eine schematische Ansicht einer achten Ausführungsform eines Endeffektors;
- Fig. 5A: eine schematische Ansicht einer Aufnahme für ein Objekt in einer Aufnahmestellung;
- Fig. 5B: eine schematische Ansicht einer Aufnahme für ein Objekt in einer Greifstellung;
- Fig. 6: eine isometrische Ansicht einer Oberseite eines Endeffektors gemäß einer neunten Ausführungsform;
- Fig. 7: eine isometrische Ansicht einer Unterseite des Endeffektors aus Fig. 6;
- Fig. 8: eine isometrische Teilansicht des Endeffektors aus Fig. 6 mit geöffneter Oberseite und mit jeweils nur einem Verlagerungselement und Lagerelement;
- Fig. 9: eine Querschnittsansicht entlang der Linie I-I aus Fig. 8;
- Fig. 10: eine Draufsicht auf die Oberseite des Endeffektors aus Fig. 6;
- Fig. 11: die Ansicht aus Fig. 6 mit zwei ersten Objekten;
- Fig. 12: die Ansicht aus Fig. 6 mit einem zweiten Objekt;
- Fig. 13: eine schematische Ansicht einer Ausführungsform eines Roboters;
- Fig. 14: eine schematische Ansicht einer Ausführungsform eines Systems; und
- Fig. 15: eine schematische Ansicht einer Ausführungsform eines Verfahrens zum Handhaben von Objekten in einem Isolator.

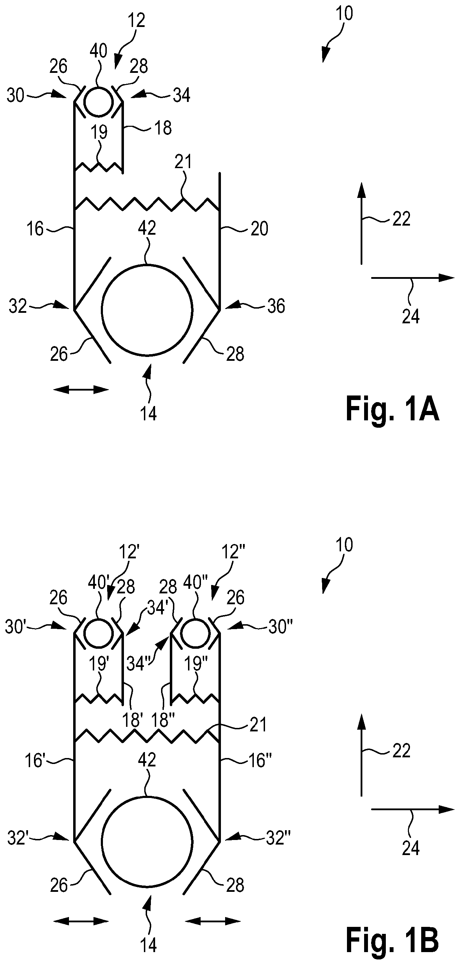

Fig. 1A zeigt eine erste Ausführungsform eines Endeffektors 10 zum Handhaben von Objekten 40, 42 in einem Isolator. Der Endeffektor 10 weist eine erste Aufnahme 12 zum Aufnehmen und Greifen eines ersten Objekts 40 und eine zweite Aufnahme 14 zum Aufnehmen und Greifen eines zweiten Objekts 42 auf.

Das erste Objekt 40 ist kleiner als das zweite Objekt 42. Die Objekte 40, 42 sind zylinderförmig ausgebildet. Das erste Objekt 40 weist einen kleineren Durchmesser als das zweite Objekt 42 auf. Die Objekte 40, 42 können beispielsweise Vials, Flaschen, Spritzen, Zylinderampullen, Füllnadeln, ein Füllnadelhalter, Petrischalen oder Agar-Platten sein. Beispielsweise kann das erste Objekt 40 ein Vial, eine Flasche, eine Spritze, eine Zylinderampullen, Füllnadeln oder ein Füllnadelhalter, insbesondere ein greifbarer Vorsprung eines Füllnadelhalters, sein. Beispielsweise kann das zweite Objekt 42 eine Petrischale oder eine Agar-Platte sein.

Die erste Aufnahme 12 und die zweite Aufnahme 14 sind in einer Längsrichtung 22 auf entgegengesetzten Seiten des Endeffektors 10 angeordnet. Jede Aufnahme12, 14 weist in der Längsrichtung 22 eine Öffnung auf, die entgegengesetzt zueinander ausgerichtet sind. Jede Öffnung weist von dem Endeffektor weg.

Jede Aufnahme 12, 14 weist einen ersten Greifabschnitt 26 und einen zweiten Greifabschnitt 28 auf. Der erste Greifabschnitt 26 und der zweite Greifabschnitt 28 sind in einer Querrichtung 24 gegenüberliegenden angeordnet. Zwischen dem ersten Greifabschnitt 26 und dem zweiten Greifabschnitt 28 der ersten Aufnahme 12 kann das erste Objekt 40 angeordnet werden. Zwischen dem ersten Greifabschnitt 26 und dem zweiten Greifabschnitt 28 der zweiten Aufnahme 14 kann das zweite Objekt 42 angeordnet werden.

Die erste Aufnahme 12 und die zweite Aufnahme 14 sind unterschiedlich groß ausgebildet. Die erste Aufnahme 12 ist kleiner als die zweite Aufnahme 14 ausgebildet. Der Abstand zwischen dem ersten und zweiten Greifabschnitt 26, 28 der ersten Aufnahme 12 ist kleiner als der Abstand zwischen dem ersten und zweiten Greifabschnitt 26, 28 der zweiten Aufnahme 14. Die erste Aufnahme 12 ist somit zum Aufnehmen und Greifen des kleineren ersten Objekts 12 geeignet, wohingegen die zweite Aufnahme zum Aufnehmen und Greifen des größeren, zweiten Objekts 42 geeignet ist.

Der Endeffektor 10 weist des Weiteren ein Verlagerungselement 16 auf. Das Verlagerungselement 16 weist an einem ersten Ende 30 den ersten Greifabschnitt 26 der ersten Aufnahme 12 auf. Insbesondere kann das Verlagerungselement 16 an dem ersten Ende 30 den ersten Greifabschnitt 26 der ersten Aufnahme 12 ausbilden. Das Verlagerungselement 16 weist an einem zweiten, entgegengesetzten Ende 32 den ersten Greifabschnitt 26 der zweiten Aufnahme 14 auf. Insbesondere kann das Verlagerungselement 16 an dem zweiten Ende 32 den ersten Greifabschnitt 26 der zweiten Aufnahme 14 ausbilden. Das Verlagerungselement 16 erstreckt sich somit von der ersten Aufnahme 12 zu der zweiten Aufnahme 14.

Der Endeffektor 10 weist des Weiteren ein erstes Lagerelement 18 auf. Das erste Lagerelement 18 ist an dem Endeffektor 10 starr angeordnet bzw. angebracht. Das erste Lagerelement 18 erstreckt sich bis zu der ersten Aufnahme 12. Der zweite Greifabschnitt 28 der ersten Aufnahme 12 ist an einem Ende 34 des ersten Lagerelements 18 angeordnet.

Der Endeffektor 10 weist des Weiteren ein zweites Lagerelement 20 auf. Das zweite Lagerelement 20 ist an dem Endeffektor 10 starr angeordnet bzw. angebracht. Das zweite Lagerelement 20 erstreckt sich bis zu der zweiten Aufnahme 14. Der zweite Greifabschnitt 28 der zweiten Aufnahme 14 ist an einem Ende 36 des zweiten Lagerelements 20 angeordnet.

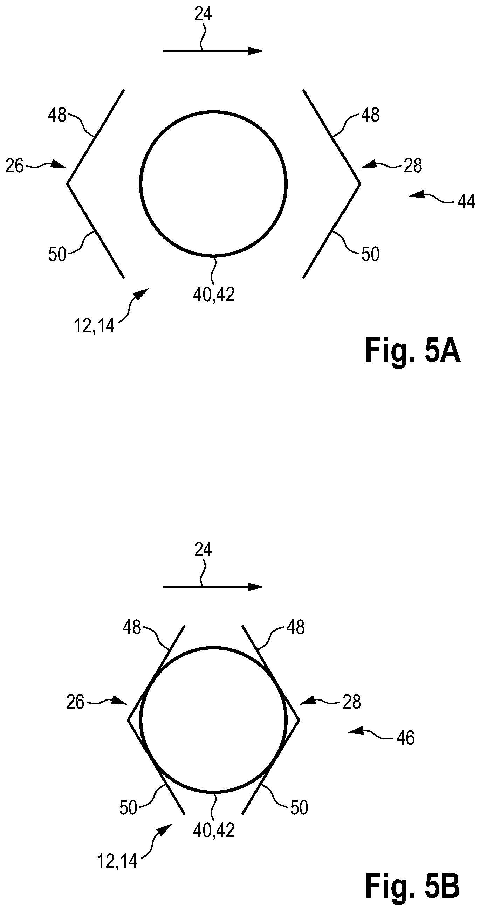

Das Verlagerungselement 16 ist an dem Endeffektor verlagerbar angeordnet. Das Verlagerungselement 16 ist insbesondere derart verlagerbar, dass die erste Aufnahme 12 und die zweite Aufnahme 14 jeweils zwischen einer Aufnahmestellung 44 und einer Greifstellung 46 verlagert werden können. Die Aufnahmestellung 44 ist in Fig. 5A dargestellt. Die Greifstellung 46 ist Fig. 5B dargestellt.

In der in Fig. 5A dargestellten Aufnahmestellung 44 sind die Greifabschnitte 26, 28 derart angeordnet, dass das entsprechende Objekt 40, 42 zwischen den Greifabschnitten 26, 28 aufgenommen bzw. eingebracht werden kann. Insbesondere ist in der Aufnahmestellung 44 der Abstand zwischen den Greifabschnitten 26, 28 so groß, dass das entsprechende Objekt 40, 42 zwischen den Greifabschnitten 26, 28 aufgenommen bzw. eingebracht werden kann. In anderen Worten ist der Abstand zwischen den Greifabschnitten 26, 28 größer als der Durchmesser des jeweiligen Objekts 40, 42.

In der in Fig. 5B dargestellten Greifstellung 46 sind die Greifabschnitte 26, 28 derart angeordnet, dass das entsprechende Objekt 40, 42 gegriffen werden kann. Dazu ist der Abstand zwischen den Greifabschnitten 26, 28 kleiner als in der Aufnahmestellung 44. Insbesondere ist der Abstand zwischen den Greifabschnitten 26, 28 ist derart klein, dass die Greifabschnitte 26, 28 an dem entsprechenden Objekt 40, 42 beidseitig anliegen und dieses zwischen sich halten oder klemmen.

Die Greifabschnitte 26, 28 können an den Enden der entsprechenden Elemente 16, 18, 20 jeweils als Aussparung ausgebildet sein. Jede Aussparung weist einen ersten Randabschnitt 48 und einen zweiten, gegenüberliegenden Randabschnitt 50 auf. In der Greifstellung 46 liegt das entsprechende Objekt 40, 42 zumindest an dem ersten Randabschnitt 48 und dem zweiten Randabschnitt 50 an. Eine Tiefe der als Aussparung ausgebildeten Greifabschnitte 26, 28 der ersten Aufnahme 12 ist in der Querrichtung 24 kleiner als die Hälfte des Durchmessers des ersten Objekts 40. Eine Tiefe der als Aussparung ausgebildeten Greifabschnitte 26, 28 der zweiten Aufnahme 14 ist in der Querrichtung 24 kleiner als die Hälfte des Durchmessers des zweiten Objekts 42. Alternativ kann eine Tiefe der Aussparungen auch tiefer sein als die Hälfte des Durchmessers des entsprechenden Objekts, wenn das Objekt an den Randabschnitten derart anliegt, dass es weniger als die Hälfte des Durchmessers des entsprechenden Objekts in die Aussparung hineinragt.

In Fig. 1A ist das Verlagerungselement 16 translatorisch in der Querrichtung 24 verlagerbar. Zum Verlagern kann der Endeffektor beispielsweise eine Antriebseinrichtung aufweisen, die dazu ausgebildet ist, das Verlagerungselement 16 in der Querrichtung 24 zu verschieben.

Das Lagerelement 18 und das Lagerelement 20 sind in der Querrichtung 24 auf derselben Seite des Verlagerungselements 16 angeordnet. Entsprechend sind auch die ersten Greifabschnitte 26, 28 der ersten und zweiten Aufnahme 12, 14 in der Querrichtung 24 auf derselben Seite des Verlagerungselements 16 angeordnet. In anderen Worten sind die erste und die zweite Aufnahme 12, 14 in der Querrichtung 24 auf derselben Seite des Verlagerungselements 16 angeordnet.

Wird das Verlagerungselements 16 in der Querrichtung 24 verlagert, so vergrößert bzw. verkleinert sich jede Aufnahme 12, 14 gleichermaßen. Dadurch werden die Aufnahmen 12, 14 zwischen der Aufnahmestellung 44 und der Greifstellung 46 gemeinsam verlagert. In anderen Worten ist das Verlagerungselement 16 derart verlagerbar, dass, wenn die erste Aufnahme 12 in der Aufnahmestellung 44 angeordnet ist, die zweite Aufnahme 14 ebenfalls in der Aufnahmestellung 44 angeordnet ist und, wenn die erste Aufnahme 12 in der Greifstellung 46 angeordnet ist, die zweite Aufnahme 14 ebenfalls in der Greifstellung 46 angeordnet ist.

Der Endeffektor 10 kann des Weiteren ein erstes Federelement 19 aufweisen. Das erste Federelement 19 ist dazu ausgebildet, die erste Aufnahme 12 in der Greifstellung 46 vorzuspannen. Das erste Federelement 19 ist dazu zwischen dem Verlagerungselement 16 und dem Lagerelement 18 angeordnet.

Zusätzlich oder alternativ kann der Endeffektor 10 des Weiteren ein zweites Federelement 21 aufweisen. Das zweite Federelement 21 ist dazu ausgebildet, die zweite Aufnahme 14 in der Greifstellung 46 vorzuspannen. Das zweite Federelement 19 ist dazu zwischen dem Verlagerungselement 16 und dem Lagerelement 20 angeordnet.

Mittels dem ersten und/oder dem zweiten Federelement 19, 21 können beide Aufnahmen 12, 14 gemeinsam in der Greifstellung vorgespannt werden.

Fig. 1B zeigt eine zweite Ausführungsform eines Endeffektors 10 zum Handhaben von Objekten 40', 40", 42 in einem Isolator. Der Endeffektor 10 der zweiten Ausführungsform weist einen ähnlichen Aufbau wie der Endeffektors 10 der ersten Ausführungsform auf. Gleiche Elemente sind mit gleichen Bezugszeichen gekennzeichnet und werden nicht weiter erläutert. Der Endeffektor 10 der zweiten Ausführungsform unterscheidet sich von dem Endeffektor 10 der ersten Ausführungsform darin, dass der Endeffektor 10 der zweiten Ausführungsform zwei erste Aufnahmen 12', 12", zwei Verlagerungselemente 16', 16", zwei erste Lagerelemente 18', 18", aber kein zweites Lagerelement 20 aufweist.

Die ersten Aufnahmen 12', 12" sind dazu ausgebildet jeweils ein erstes Objekt 40', 40" aufzunehmen und zu greifen. Die ersten Objekte 40', 40" sind vorzugsweise gleich. Jede Aufnahme 12', 12", 14 weist ebenfalls einen ersten und einen zweiten Greifabschnitt 26, 28 auf. Die Lagerelemente 18', 18" sind entsprechend dem Lagerelement 18 ausgebildet. Die Verlagerungselemente 16', 16" sind entsprechend dem Verlagerungselement 16 ausgebildet.

Das Verlagerungselement 16' weist an einem ersten Ende 30' den ersten Greifabschnitt 26 der Aufnahme 12' auf. Das Verlagerungselement 16' weist an einem zweiten, entgegengesetzten Ende 32' den ersten Greifabschnitt 26 der Aufnahme 14 auf. Das Verlagerungselement 16" weist an einem ersten Ende 30" den ersten Greifabschnitt 26 der Aufnahme 12" auf. Das Verlagerungselement 16" weist an einem zweiten, entgegengesetzten Ende 32" den zweiten Greifabschnitt 28 der Aufnahme 14 auf.

Das Lagerelement 18' weist an einem Ende 34' den zweiten Greifabschnitt 28 der Aufnahme 12' auf. Das Lagerelement 18" weist an einem Ende 34" den zweiten Greifabschnitt 28 der Aufnahme 12" auf.

Die Aufnahmen 12' und 12" sind in der Querrichtung 24 voneinander beabstandet. Die Aufnahmen 12' und 12" sind in der Längsrichtung 22 im Wesentlichen auf derselben Höhe angeordnet. Dementsprechend sind die Verlagerungselemente 16', 16" in der Querrichtung 24 voneinander beabstandet. Die Lagerelemente 18' und 18" sind ebenfalls in der Querrichtung 24 voneinander beabstandet.

Die Lagerelemente 18' und 18" sind zwischen den Verlagerungselemente 16', 16" angeordnet. Dementsprechend sind die Aufnahmen 12' und 14 in der Querrichtung 24 auf derselben Seite des Verlagerungselements 16' angeordnet und die Aufnahmen 12" und 14 in der Querrichtung 24 auf derselben Seite des Verlagerungselements 16" angeordnet. Die Lagerelemente 18' und 18" können grundsätzlich starr oder beweglich an dem Endeffektor 10 angeordnet sein. In der in Fig. 1B dargestellten Ausführungsform sind die Lagerelemente 18' und 18" starr, das heißt fest, an dem Endeffektor befestigt.

Die Verlagerungselemente 16', 16" sind in der Querrichtung 24 translatorisch verlagerbar. Dazu kann der Endeffektor jeweils eine Antriebseinrichtung aufweisen, die dazu ausgebildet ist, das entsprechende Verlagerungselement 16', 16" in der Querrichtung 24 zu verschieben. Alternativ kann auch nur eine Antriebseinrichtung vorgesehen sein, die beide Verlagerungselemente 16', 16" in der Querrichtung 24 verschieben kann. Die Antriebseinrichtungen sind vorzugsweise derart gesteuert, dass die Verlagerungselemente 16', 16" entgegengesetzt verlagert werden. In anderen Worten, werden die Verlagerungselemente 16', 16" mittels der Antriebseinrichtungen in der Querrichtung 24 entweder aufeinander zu oder voneinander weg bewegt.

Werden die Verlagerungselemente 16' und 16" in der Querrichtung 24 aufeinander zu verlagert, so wird jede Aufnahme 12', 12", 14 in die Greifstellung 46 verlagert. Werden die Verlagerungselemente 16' und 16" in der Querrichtung 24 voneinander weg verlagert, so wird jede Aufnahme 12', 12", 14 in die Aufnahmestellung 44 verlagert. In anderen Worten, sind die Verlagerungselemente 16' und 16" derart verlagerbar, dass, wenn die ersten Aufnahmen 12', 12 " in der Aufnahmestellung 44 angeordnet ist, die zweite Aufnahme 14 ebenfalls in der Aufnahmestellung 44 angeordnet ist und, wenn die ersten Aufnahmen 12', 12" in der Greifstellung 46 angeordnet ist, die zweite Aufnahme 14 ebenfalls in der Greifstellung 46 angeordnet ist.

Der Endeffektor 10 kann des Weiteren ein zwei erste Federelemente 19', 19" aufweisen. Die ersten Federelemente 19', 19" sind jeweils dazu ausgebildet, jeweils eine der ersten Aufnahmen 12', 12" in der Greifstellung 46 vorzuspannen. Die ersten Federelemente 19', 19" sind dazu jeweils zwischen dem entsprechenden Verlagerungselement 16', 16" und dem entsprechenden ersten Lagerelement 18', 18" angeordnet.

Zusätzlich oder alternativ kann der Endeffektor 10 des Weiteren ein zweites Federelement 21 aufweisen. Das zweite Federelement 21 ist dazu ausgebildet, die zweite Aufnahme 14 in der Greifstellung 46 vorzuspannen. Das zweite Federelement 19 ist dazu zwischen dem ersten Verlagerungselement 16' und dem zweiten Verlagerungselement 16" angeordnet.

Mittels den ersten Federelementen 19', 19" und/oder dem zweiten Federelement 21 können alle Aufnahmen 12', 12", 14 gemeinsam in der Greifstellung 46 vorgespannt werden.

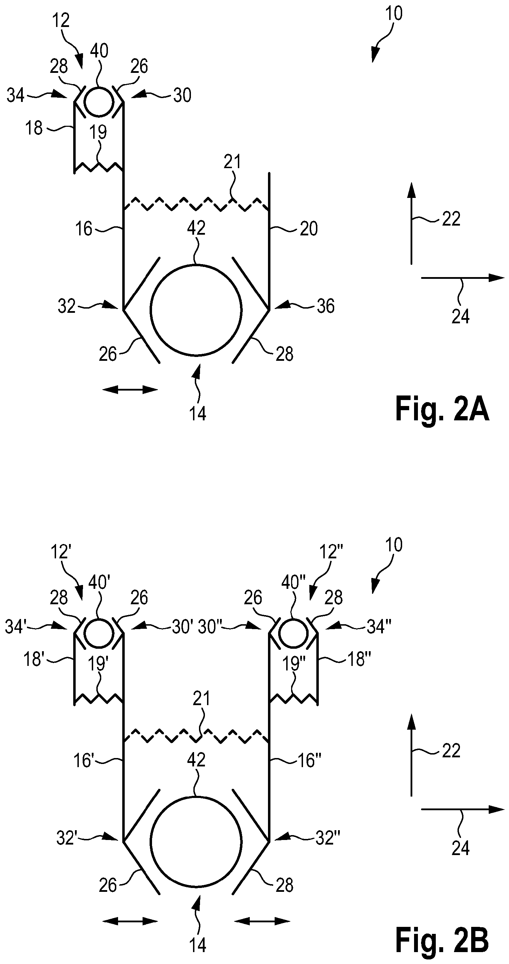

Fig. 2A zeigt eine dritte Ausführungsform eines Endeffektors 10 zum Handhaben von Objekten 40, 42 in einem Isolator. Der Endeffektor 10 der dritten Ausführungsform entspricht im Wesentlichen dem Endeffektors 10 der ersten Ausführungsform. Gleiche Elemente sind mit gleichen Bezugszeichen gekennzeichnet und werden nicht weiter erläutert. Der Endeffektor 10 der dritten Ausführungsform unterscheidet sich von dem Endeffektor 10 der ersten Ausführungsform darin, dass das erste Lagerelement 18 und das Lagerelement 20 in der Querrichtung 24 auf entgegengesetzten Seiten des Verlagerungselements 16 angeordnet. Entsprechend sind auch die ersten Greifabschnitte 26, 28 der ersten und zweiten Aufnahme 12, 14 in der Querrichtung 24 auf entgegengesetzten Seiten des Verlagerungselements 16 angeordnet. In anderen Worten sind die erste und die zweite Aufnahme 12, 14 in der Querrichtung 24 auf entgegengesetzten Seiten des Verlagerungselements 16 angeordnet.

In Fig. 2A ist das Verlagerungselement 16 des Endeffektors 10 der der dritten Ausführungsform ebenfalls translatorisch in der Querrichtung 22 verlagerbar. Wird das Verlagerungselements 16 in der Querrichtung 24 verlagert, so vergrößert bzw. verkleinert sich jede Aufnahme 12, 14 im Wechsel. Dadurch werden die Aufnahmen 12, 14 zwischen der Aufnahmestellung 44 und der Greifstellung 46 abwechselnd verlagert. In anderen Worten ist das Verlagerungselement 16 derart verlagerbar, dass, wenn die erste Aufnahme 12 in der Aufnahmestellung 44 angeordnet ist, die zweite Aufnahme 14 in der Greifstellung 46 angeordnet ist und, wenn die erste Aufnahme 12 in der Greifstellung 46 angeordnet ist, die zweite Aufnahme 14 ebenfalls in der Aufnahmestellung 44 angeordnet ist.

Der Endeffektor 10 der dritten Ausführungsform weist entweder das erste Federelement 19 zum Vorspannen der ersten Aufnahme 12 in die Greifstellung 46 oder das zweite Federelement 21 zum Vorspannen der zweiten Aufnahme 14 in die Greifstellung 46 auf.

Fig. 2B zeigt eine vierte Ausführungsform eines Endeffektors 10 zum Handhaben von Objekten 40', 40", 42 in einem Isolator. Der Endeffektor 10 der vierten Ausführungsform entspricht im Wesentlichen dem Endeffektors 10 der zweiten Ausführungsform. Gleiche Elemente sind mit gleichen Bezugszeichen gekennzeichnet und werden nicht näher erläutert. Der Endeffektor 10 der vierten Ausführungsform unterscheidet sich von dem Endeffektor 10 der zweiten Ausführungsform darin, dass das die zweite Aufnahme 14 zwischen den Verlagerungselementen 16', 16" angeordnet ist, während jede erste Aufnahme 12', 12" auf der der zweiten Aufnahme 14 abgewandten Seite des entsprechenden Verlagerungselements 16', 16" angeordnet ist.

Werden die Verlagerungselemente 16' und 16" in der Querrichtung 24 aufeinander zu verlagert, so werden die Aufnahmen 12', 12" in die Aufnahmestellung 44 verlagert, während die Aufnahme 14 in die Greifstellung 46 verlagert wird. Werden die Verlagerungselemente 16' und 16" in der Querrichtung 24 voneinander weg verlagert, so werden die Aufnahmen 12', 12" in die Greifstellung 46 verlagert, während die zweite Aufnahme 14 in die Aufnahmestellung 44 verlagert wird. In anderen Worten, sind die Verlagerungselemente 16' und 16" derart verlagerbar, dass, wenn die ersten Aufnahmen 12', 12 " in der Aufnahmestellung 44 angeordnet sind, die zweite Aufnahme 14 in der Greifstellung angeordnet ist und, wenn die ersten Aufnahmen 12', 12" in der Greifstellung 46 angeordnet sind, die zweite Aufnahme 14 in der Aufnahmestellung 44 angeordnet ist.

Der Endeffektor 10 der vierten Ausführungsform weist entweder die ersten Federelemente 19', 19" zum Vorspannen der ersten Aufnahmen 12', 12" in die Greifstellung 46 oder das zweite Federelement 21 zum Vorspannen der zweiten Aufnahme 14 in die Greifstellung 46 auf.

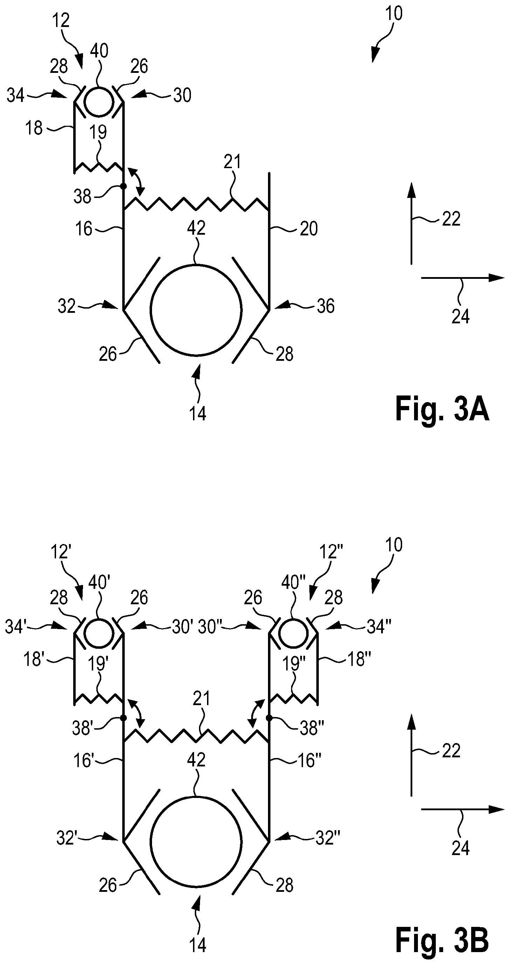

Fig. 3A zeigt eine fünfte Ausführungsform eines Endeffektors 10 zum Handhaben von Objekten 40, 42 in einem Isolator. Der Endeffektor 10 der fünften Ausführungsform entspricht im Wesentlichen dem Endeffektors 10 der dritten Ausführungsform. Gleiche Elemente sind mit gleichen Bezugszeichen gekennzeichnet und werden nicht weiter erläutert. Der Endeffektor 10 der fünften Ausführungsform unterscheidet sich von dem Endeffektor der dritten Ausführungsform darin, dass das Verlagerungselement 16 des Endeffektors 10 der der fünften Ausführungsform rotatorisch um eine Drehachse 38 verlagerbar. Die Drehachse 38 ist senkrecht zu der Längsrichtung 22 und senkrecht zu der Querrichtung 24 angeordnet. Die Drehachse 38 ist zwischen dem ersten Ende 30 und dem zweiten Ende 32 des Verlagerungselements 16 angeordnet.

Wird das Verlagerungselements 16 um die Drehachse 38 gedreht, so vergrößert bzw. verkleinert sich jede Aufnahme 12, 14 gleichzeitig. Dadurch werden die Aufnahmen 12, 14 zwischen der Aufnahmestellung 44 und der Greifstellung 46 gemeinsam verlagert. In anderen Worten ist das Verlagerungselement 16 derart verlagerbar, dass, wenn die erste Aufnahme 12 in der Aufnahmestellung 44 angeordnet ist, die zweite Aufnahme 14 ebenfalls in der Aufnahmestellung 44 angeordnet ist und, wenn die erste Aufnahme 12 in der Greifstellung 46 angeordnet ist, die zweite Aufnahme 14 ebenfalls in der Greifstellung 46 angeordnet ist.

Der Endeffektor der fünften Ausführungsform kann das erste Federelement 19 und/oder das zweite Federelement 21 aufweisen. Mittels dem ersten und/oder dem zweiten Federelement 19, 21 können beide Aufnahmen 12, 14 gemeinsam in der Greifstellung vorgespannt werden.

Fig. 3B zeigt eine sechste Ausführungsform eines Endeffektors 10 zum Handhaben von Objekten 40', 40", 42 in einem Isolator. Der Endeffektor 10 der sechsten Ausführungsform entspricht im Wesentlichen dem Endeffektors 10 der vierten Ausführungsform. Gleiche Elemente sind mit gleichen Bezugszeichen gekennzeichnet und werden nicht näher erläutert. Der Endeffektor 10 der sechsten Ausführungsform unterscheidet sich von dem Endeffektor 10 der vierten Ausführungsform darin, dass die Verlagerungselemente 16', 16" des Endeffektors 10 der der sechsten Ausführungsform rotatorisch um jeweils eine erste Drehachse 38', 38" verlagerbar sind. Die ersten Drehachsen 38', 38" sind parallel zueinander angeordnet und sind jeweils senkrecht zu der Längsrichtung 22 und senkrecht zu der Querrichtung 24 angeordnet. Jede Drehachsen 38', 38" ist zwischen dem ersten Ende 30', 30" und dem zweiten Ende 32', 32" des entsprechenden Verlagerungselements 16', 16" angeordnet. Die jeweiligen Antriebseinrichtungen sind dazu ausgebildet, die entsprechenden Verlagerungselement 16', 16" in entgegengesetzten Drehrichtungen um die Drehachsen 38', 38" zu drehen. Dabei werden die ersten Enden 30', 30" bzw. die zweiten Enden 32', 32" entweder aufeinander zu oder voneinander weg geschwenkt.

Werden die Verlagerungselemente 16' und 16" derart um Drehachsen 38', 38" gedreht, dass die zweiten Enden 32', 32" aufeinander zu geschwenkt werden, so werden die Aufnahmen 12', 12" in die Greifstellung 46 verlagert, während die Aufnahme 14 ebenfalls in die Greifstellung 46 verlagert wird. Werden die Verlagerungselemente 16' und 16" derart um Drehachsen 38', 38" gedreht, dass die zweiten Enden 32', 32" voneinander weg geschwenkt werden, so werden die Aufnahmen 12', 12" in die Aufnahmestellung 44 verlagert, während die zweite Aufnahme 14 ebenfalls in die Aufnahmestellung 44 verlagert wird. In anderen Worten, sind die Verlagerungselemente 16' und 16" derart verlagerbar, dass, wenn die ersten Aufnahmen 12', 12 " in der Aufnahmestellung 44 angeordnet ist, die zweite Aufnahme 14 in der Aufnahmestellung 44 angeordnet ist und, wenn die ersten Aufnahmen 12', 12" in der Greifstellung 46 angeordnet ist, die zweite Aufnahme 14 ebenfalls in der Greifstellung 46 angeordnet ist.

Der Endeffektor der sechsten Ausführungsform kann die ersten Federelemente 19', 19" und/oder das zweite Federelement 21 aufweisen. Mittels den ersten Federelementen 19', 19" und/oder dem zweiten Federelement 21 können alle Aufnahmen 12', 12", 14 gemeinsam in der Greifstellung 46 vorgespannt werden.

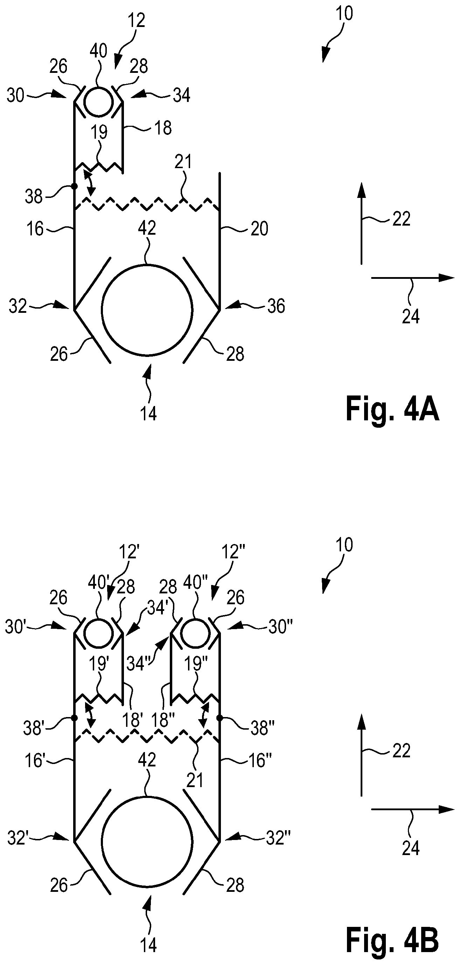

Fig. 4A zeigt eine siebte Ausführungsform eines Endeffektors 10 zum Handhaben von Objekten 40, 42 in einem Isolator. Der Endeffektor 10 der siebten Ausführungsform entspricht im Wesentlichen dem Endeffektors 10 der ersten Ausführungsform. Gleiche Elemente sind mit gleichen Bezugszeichen gekennzeichnet und werden nicht weiter erläutert. Der Endeffektor 10 der siebten Ausführungsform unterscheidet sich von dem Endeffektor der ersten Ausführungsform darin, dass das Verlagerungselement 16 rotatorisch um die Drehachse 38 verlagerbar ist. Die Drehachse 38 ist senkrecht zu der Längsrichtung 22 und senkrecht zu der Querrichtung 24 angeordnet. Die Drehachse 38 ist zwischen dem ersten Ende 30 und dem zweiten Ende 32 des Verlagerungselements 16 angeordnet.

Wird das Verlagerungselement 16 um die Drehachse 38 gedreht, so vergrößert bzw. verkleinert sich jede Aufnahme 12, 14 im Wechsel. Dadurch werden die Aufnahmen 12, 14 zwischen der Aufnahmestellung 44 und der Greifstellung 46 abwechselnd verlagert. In anderen Worten ist das Verlagerungselement 16 derart verlagerbar, dass, wenn die erste Aufnahme 12 in der Aufnahmestellung 44 angeordnet ist, die zweite Aufnahme 14 in der Greifstellung 46 angeordnet ist und, wenn die erste Aufnahme 12 in der Greifstellung 46 angeordnet ist, die zweite Aufnahme 14 ebenfalls in der Aufnahmestellung 44 angeordnet ist.

Der Endeffektor 10 der dritten Ausführungsform weist entweder das erste Federelement 19 zum Vorspannen der ersten Aufnahme 12 in die Greifstellung 46 oder das zweite Federelement 21 zum Vorspannen der zweiten Aufnahme 14 in die Greifstellung 46 auf.

Fig. 4B zeigt eine achte Ausführungsform eines Endeffektors 10 zum Handhaben von Objekten 40', 40", 42 in einem Isolator. Der Endeffektor 10 der achten Ausführungsform entspricht im Wesentlichen dem Endeffektors 10 der zweiten Ausführungsform. Gleiche Elemente sind mit gleichen Bezugszeichen gekennzeichnet und werden nicht näher erläutert. Der Endeffektor 10 der achten Ausführungsform unterscheidet sich von dem Endeffektor 10 der zweiten Ausführungsform darin, dass die Verlagerungselemente 16', 16" des Endeffektors 10 der achten Ausführungsform rotatorisch um jeweils eine Drehachse 38', 38" verlagerbar sind. Die Drehachsen 38', 38" sind parallel zueinander angeordnet und sind jeweils senkrecht zu der Längsrichtung 22 und senkrecht zu der Querrichtung 24 angeordnet. Jede Drehachsen 38', 38" ist zwischen dem ersten Ende 30', 30" und dem zweiten Ende 32', 32" des entsprechenden Verlagerungselements 16', 16" angeordnet. Die jeweiligen Antriebseinrichtungen sind dazu ausgebildet, die entsprechenden Verlagerungselement 16', 16" in entgegengesetzten Drehrichtungen um die Drehachsen 38', 38" zu drehen. Dabei werden die ersten Enden 30', 30" bzw. die zweiten Enden 32', 32" entweder aufeinander zu oder voneinander weg geschwenkt.

Werden die Verlagerungselemente 16' und 16" derart um Drehachsen 38', 38" gedreht, dass die zweiten Enden 32', 32" aufeinander zu geschwenkt werden, so werden die Aufnahmen 12', 12" in die Aufnahmestellung 44 verlagert, während die Aufnahme 14 in die Greifstellung 46 verlagert wird. Werden die Verlagerungselemente 16' und 16" derart um Drehachsen 38', 38" gedreht, dass die zweiten Enden 32', 32" voneinander weg geschwenkt werden, so werden die Aufnahmen 12', 12" in die Greifstellung 46 verlagert, während die zweite Aufnahme 14 in die Aufnahmestellung 44 verlagert wird. In anderen Worten, sind die Verlagerungselemente 16' und 16" derart verlagerbar, dass, wenn die ersten Aufnahmen 12', 12 " in der Aufnahmestellung 44 angeordnet ist, die zweite Aufnahme 14 in der Greifstellung angeordnet ist und, wenn die ersten Aufnahmen 12', 12" in der Greifstellung 46 angeordnet ist, die zweite Aufnahme 14 ebenfalls in der Aufnahmestellung 44 angeordnet ist.

Der Endeffektor 10 der vierten Ausführungsform weist entweder die ersten Federelemente 19', 19" zum Vorspannen der ersten Aufnahmen 12', 12" in die Greifstellung 46 oder das zweite Federelement 21 zum Vorspannen der zweiten Aufnahme 14 in die Greifstellung 46 auf.

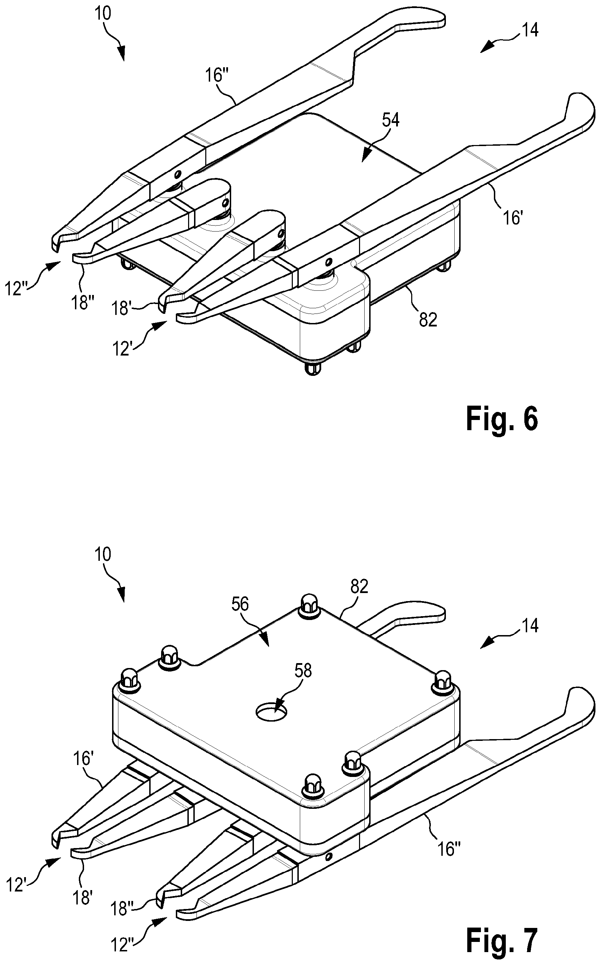

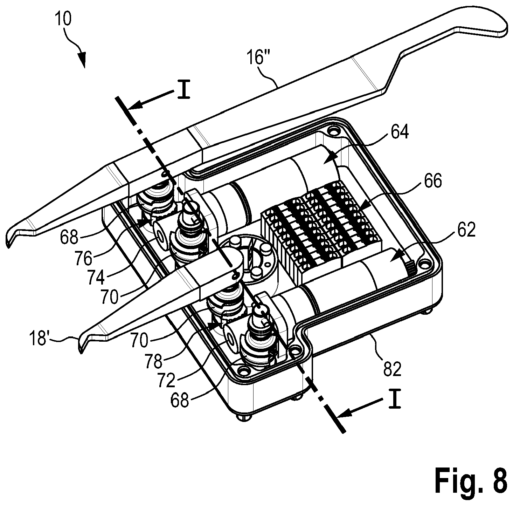

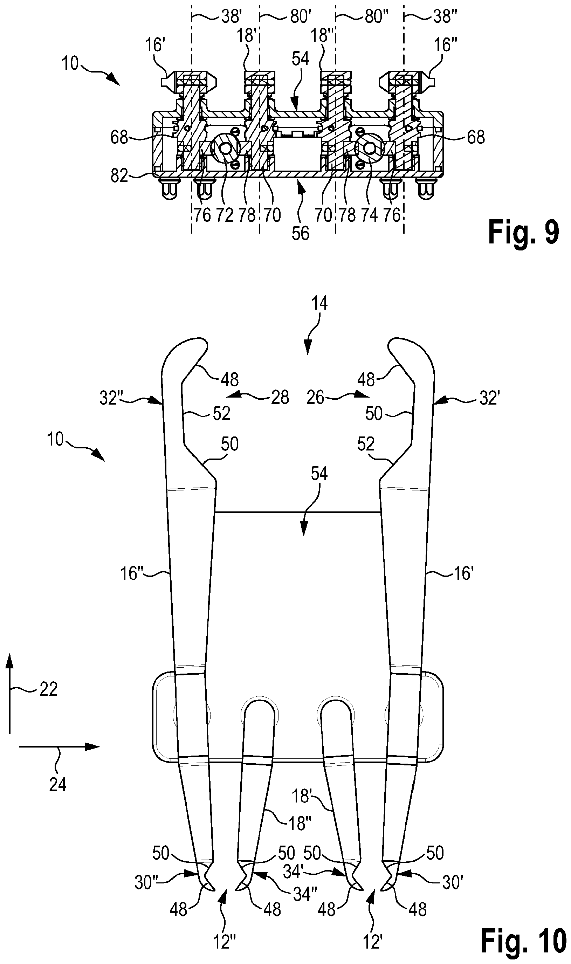

Die Figuren 6 bis 10 zeigen eine neunte Ausführungsform eines Endeffektors 10 zum Handhaben von Objekten 40', 40", 42 in einem Isolator. Der Endeffektor 10 der neunten Ausführungsform entspricht im Wesentlichen dem Endeffektors 10 der achten Ausführungsform. Gleiche Elemente sind mit gleichen Bezugszeichen gekennzeichnet und werden nicht näher erläutert. Der Endeffektor 10 der neunte Ausführungsform unterscheidet sich von dem Endeffektor 10 der achten Ausführungsform darin, dass die Lagerelemente 18' und 18" drehbar um jeweils eine zweite Drehachse 80', 80" an dem Endeffektor 10 gelagert sind, wobei die zweiten Drehachsen 80', 80" parallel zu den ersten Drehachsen 38', 38" angeordnet sind. Zudem ist in der neunte Ausführungsform im Detail dargestellt, wie die Verlagerungselemente 16', 16" und die Lagerelemente 18', 18" gekoppelt bewegt werden können.

Der Endeffektor 10 der neunten Ausführungsform weist des Weiteren eine erste Antriebseinrichtung 62 auf, die dazu ausgebildet ist, das Verlagerungselement 16' und das Lagerelement 18' zu bewegen. Der Endeffektor 10 weist des Weiteren eine zweite Antriebseinrichtung 64 auf, die dazu ausgebildet ist, das Verlagerungselement 16" und das Lagerelement 18" zu bewegen. In anderen Worten weist der Endeffektor 10 je eine Antriebseinrichtung 62, 64 zum Verlagern jeweils eines der Verlagerungselemente 16', 16" und jeweils eines Lagerelements 18', 18" auf.

Jede Antriebseinrichtung 62, 64 ist dazu ausgebildet, das entsprechende Verlagerungselement 16', 16" um die jeweilige erste Drehachse 38', 38" zu drehen und das entsprechende Lagerelement 18', 18" um die jeweilige zweite Drehachse 80', 80" zu drehen. Die erste Antriebseinrichtung 62 weist eine erste Antriebswelle 72 auf, mittels der das Verlagerungselement 16' und das Lagerelement 18' angetrieben werden. Die zweite Antriebseinrichtung 64 weist eine zweite Antriebswelle 74 auf, mittels der das Verlagerungselement 16" und das Lagerelement 18" angetrieben werden. Die Längsachsen der Antriebswellen 72, 74 sind parallel zueinander angeordnet und senkrecht zu den ersten und zweiten Drehachsen 38', 38", 80', 80" angeordnet. Beispielsweise können die Längsachsen der Antriebswellen 72, 74 parallel zu der Längsrichtung 22 angeordnet sein.

Der Endeffektor 10 kann des Weiteren eine Verteilereinrichtung 66 aufweisen. Die Verteilereinrichtung 66 kann dazu eingerichtet sein, die elektronischen Komponenten des Endeffektor 10 mit elektrische Energie (Betriebsspannung) zu versorgen und/oder den elektronischen Komponenten des Endeffektor 10 Steuersignale von einer Steuereinrichtung bereitzustellen. Dazu kann die Verteilereinrichtung 66 eine Vielzahl von Klemmen für Signalleitungen und/oder Energieleitungen aufweisen.

Der Endeffektor 10 kann des Weiteren eine Speichereinrichtung zum Speicher von elektrischer Energie aufweisen. Die Speichereinrichtung kann beispielsweise eine Batterie oder einen Akku sein. Die Antriebseinrichtungen 62, 64 können mit der Speichereinrichtung elektrisch gekoppelt sein. Die Antriebseinrichtungen 62, 64 können beispielsweise über die Verteilereinrichtung 66 mit der Speichereinrichtung elektrisch verbunden sein. Alternativ kann die Verteilereinrichtung 66 auch die Speichereinrichtung aufweisen.

Der Endeffektor 10 weist für jedes Verlagerungselement 16', 16" ein entsprechendes erstes Kopplungselement 68 auf. Jedes erste Kopplungselement 68 ist drehfest mit dem entsprechenden Verlagerungselement 16', 16" verbunden. Jedes erste Kopplungselement 68 ist um die entsprechende erste Drehachse 38', 38" drehbar gelagert. Somit ist jedes Verlagerungselement 16', 16" mittels des entsprechenden ersten Kopplungselements 68 an dem Endeffektor 10 um die jeweilige erste Drehachse 38', 38" drehbar gelagert. Jedes erste Kopplungselement 68 ist mit der entsprechenden Antriebswelle 72, 74 gekoppelt. Dazu weist jedes erste Kopplungselement 68 einen ersten Zahnungsabschnitt 76 auf, der mit der entsprechenden Antriebswelle 72, 74 in Eingriff ist. Beispielsweise kann jede Antriebswelle 72, 74 ein Gewinde aufweisen und jeder erste Zahnungsabschnitt 76 Zähne aufweisen, die in einer Umfangsrichtung um die jeweilige erste Drehachse 38', 38" verteilt sind, wobei das Gewinde jeder Antriebwelle 72, 74 mit den Zähnen des entsprechenden ersten Zahnungsabschnitts 76 in Eingriff ist. Werden die Antriebswellen 72, 74 um die jeweiligen Längsachsen gedreht, so werden die entsprechenden Kopplungselemente 68 und dadurch auch die entsprechenden Verlagerungselement 16', 16" um die jeweilige erste Drehachse 38', 38" gedreht.

Des Weiteren weist der Endeffektor 10 für jedes Lagerelement 18', 18" ein entsprechendes zweites Kopplungselement 70 auf. Jedes zweite Kopplungselement 70 ist drehfest mit dem entsprechenden Lagerelement 18', 18" verbunden. Jedes zweite Kopplungselement 70 ist um die entsprechende zweite Drehachse 80', 80" drehbar gelagert. Somit ist jedes Lagerelement 18', 18" mittels des entsprechenden zweiten Kopplungselements 70 an dem Endeffektor 10 um die jeweilige zweite Drehachse 80', 80" drehbar gelagert. Jedes zweite Kopplungselement 70 ist mit der entsprechenden Antriebswelle 72, 74 gekoppelt. Dazu weist jedes zweite Kopplungselement 70 einen zweiten Zahnungsabschnitt 78 auf, der mit der entsprechenden Antriebswelle 72, 74 in Eingriff ist. Beispielsweise kann jeder zweite Zahnungsabschnitt 78 Zähne aufweisen, die in einer Umfangsrichtung um die jeweilige zweite Drehachse 80', 80" verteilt sind, wobei das Gewinde jeder Antriebwelle 72, 74 mit den Zähnen des entsprechenden zweiten Zahnungsabschnitts 78 in Eingriff ist. Werden die Antriebswellen 72, 74 um die jeweiligen Längsachsen gedreht, so werden die entsprechenden zweiten Kopplungselemente 70 und dadurch auch die entsprechenden Lagerelemente 18', 18" um die jeweilige zweite Drehachse 80', 80" gedreht.

Da je ein erstes Kopplungselement 68 und ein zweites Kopplungselement 70 je einer Antriebswelle 72, 74 in Eingriff stehen, werden bei einer Drehung einer der Antriebswellen 72, 74 sowohl das erste Kopplungselement 68 als auch das zweite Kopplungselement 70 um die entsprechende erste Drehachse bzw. zweite Drehachse 38', 38", 80', 80" gedreht. Dadurch sind die Drehbewegungen jedes Verlagerungselements 16', 16" und des entsprechenden Lagerelements 18', 18" miteinander gekoppelt. Insbesondere ist die jeweilige Antriebswelle 72, 74 zwischen dem entsprechenden ersten und dem zweiten Kopplungselement 68, 70 angeordnet. Dadurch werden das erste Kopplungselement 68 und das zweite Kopplungselement 70 in entgegengesetzten Drehrichtungen gedreht, so dass die Greifabschnitte 26, 28 der jeweiligen ersten Aufnahme 12', 12" aufeinander zu bzw. voneinander weg bewegt werden.

Der Endeffektor 10 weist ein Gehäuse 82 auf. Das Gehäuse 82 weist eine Oberseite 54 und eine Unterseite 56 auf. Die Antriebseinrichtungen 62, 64 und die Verteilereinrichtung 66 sind in dem Gehäuse 82 angeordnet. Die Verlagerungselemente 16', 16" und die Lagerelemente 18', 18" sind außerhalb des Gehäuses 82 an der Oberseite 54 angeordnet. Die Kopplungselemente 68, 70 erstrecken sich von den entsprechenden Verlagerungselementen 16', 16" und Lagerelementen 18', 18" in das Gehäuse hinein. Das Gehäuse weist hierzu auf der Oberseite vier entsprechende Bohrungen auf, durch die die Kopplungselemente 68, 70 in das Gehäuse eingeführt sind.

Das Gehäuse weist auf der Unterseite 56 ebenfalls eine Bohrung 58 auf. Im inneren des Gehäuses ist ein Lager 60 angeordnet, das mit der Bohrung fluchtet. Ein Lagerungselement eines Roboters kann durch die Bohrung 58 von außen hindurch geführt werden und mit dem Lager 60 gekoppelt werden, um den Endeffektor 10 an dem Roboter drehbar zu lagern. Eine Drehachse dieser Lagerung ist vorzugsweise parallel zu den ersten und zweiten Drehachsen 38', 38", 80', 80".

Durch die Bohrung 58 können Signalleitungen und/oder Steuerleitungen in das Gehäuse eingeführt werden. Die Signalleitungen und/oder Steuerleitungen können beispielsweise mit der Verteilereinrichtung 66 gekoppelt werden. Alternativ können die Signalleitungen und/oder Steuerleitungen auch direkt an den elektronischen Komponenten des Endeffektors, beispielsweise den Antriebseinrichtungen 62, 64, angeschlossen werden, um die elektronischen Komponenten zu steuern und mit elektrischer Energie zu versorgen.

Die Greifabschnitte 26, 28 der ersten Aufnahmen 12', 12" sind als V-förmige Aussparungen ausgebildet und weisen jeweils einen ersten Randabschnitt 48 und einen zweiten Randabschnitt 50 auf, die aneinander angrenzen und in einem Winkel zueinander angeordnet sind. Der erste und der zweite Randabschnitt 48, 50 grenzen insbesondere am tiefsten Punkt der Aussparung aneinander an.

Die Greifabschnitte 26, 28 der zweiten Aufnahme 14 sind als Aussparung ausgebildet und weisen jeweils einen ersten Randabschnitt 48, einen zweiten Randabschnitt 50 und einen Zwischenabschnitt 52 auf, der zwischen dem ersten und dem zweiten Randabschnitt 48, 50 angeordnet ist. Der erste der zweite Randabschnitt 48, 50 sind in einem Winkel zueinander angeordnet. Der Zwischenabschnitt 52 bildet dabei insbesondere den tiefsten Abschnitt der Aussparung, wobei die Tiefe der Aussparung entlang des Zwischenabschnitts 52 gleich bleibt.

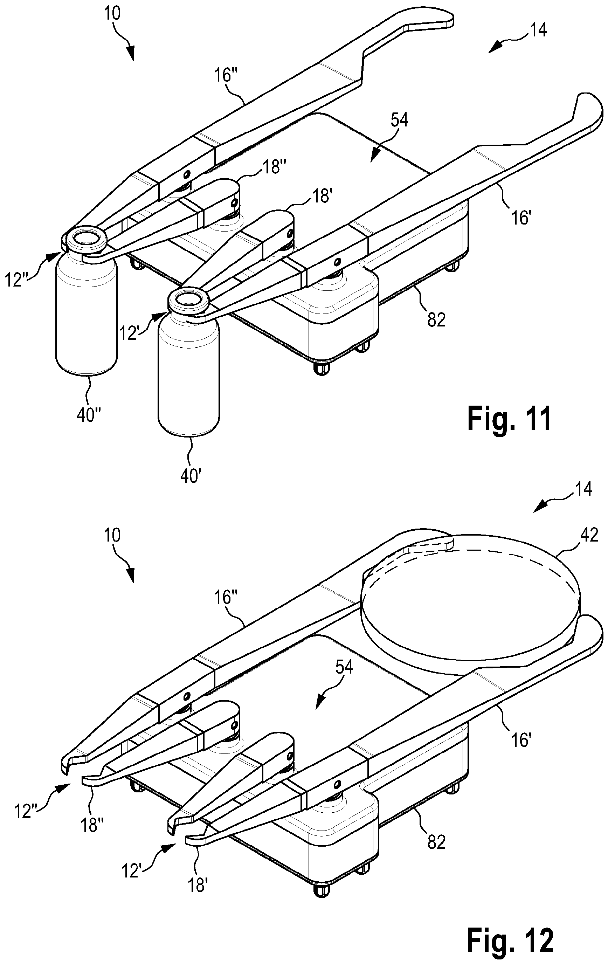

In Fig. 11 ist beispielhaft die Anordnung von zwei ersten Objekten 40', 40" in den ersten Aufnahmen 12', 12" dargestellt. Die ersten Objekte 40', 40" sind in diesem Fall zwei gleich ausgebildete Flaschen. Entsprechend können in den ersten Aufnahmen 12', 12" auch Vials, Karpulen, Spritzen und/oder Zylinderampullen angeordnet sein.

In Fig. 12 ist beispielhaft die Anordnung eines zweiten Objekts 42 in der zweiten Aufnahme 14 dargestellt. Das zweite Objekt 42 ist in diesem Fall eine Agar-Platte bzw. Petrischale.

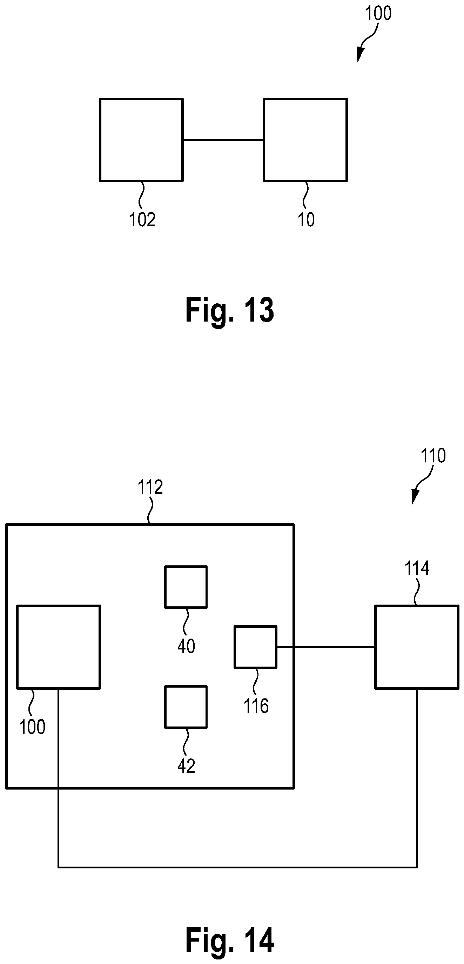

Fig. 13 zeigt eine Ausführungsform eines Roboters 100 zum Handhaben von Objekten in einem Isolator. Der Roboter weist einen Endeffektor 10 eine Trägerstruktur 102 zum Tragen des Endeffektors 10 auf. Der Endeffektor 10 kann entsprechend einer der in den Figuren 1 bis 12 beschriebenen Ausführungsformen ausgebildet sein. Der Roboter 100 ist dazu ausgebildet, den Endeffektor 10 im Isolator zu bewegen und auszurichten.

Die Trägerstruktur 102 kann gelenkig ausgebildet sein. Die Trägerstruktur 102 kann beispielsweise mehrere Arme aufweisen, die über Gelenke miteinander gekoppelt sind. Die Trägerstruktur 102 des Roboters 100 kann derart beweglich ausgebildet sein, dass der Endeffektor 10 im Isolator mittels des Roboters 100 bewegt werden kann. Zum Bewegen der Trägerstruktur 102 kann der Roboter 100 beispielsweise eine oder mehrere Antriebseinrichtungen aufweisen.

Der Endeffektor kann an einem Ende der Trägerstruktur drehbar gelagert sein. Auf diese Weise können die Aufnahmen 12, 14 des Endeffektors 10 im Isolator bezüglich der aufzunehmenden Objekte 40, 42 ausgerichtet werden. Zum Drehen des Endeffektors 10 kann der Roboter 100 ebenfalls eine weitere Antriebseinrichtung aufweisen.

Fig. 14 zeigt eine Ausführungsform eines Systems 110 zum Handhaben von Objekten 40, 42 in einem Isolator 112. Das System weist den Isolator 112 und einen Roboter 100 auf. Der Roboter 100 kann entsprechend der in den Figuren 13 beschriebenen Ausführungsform ausgebildet sein. Ein erstes Objekt 40 und/oder ein zweites Objekt 42 können in dem Isolator 112 angeordnet sein.

Das System weist des Weiteren eine Steuerungseinrichtung 114 auf. Die Steuerungseinrichtung 114 ist dazu ausgebildet, die Bewegung des Endeffektors 10 und/oder des Roboters 100 zu steuern.

Die Steuerungseinrichtung 114 kann beispielsweise mindestens eine Antriebseinrichtung des Endeffektors 10 steuern, um die Aufnahmen 12, 14 zwischen der Aufnahmestellung 44 und der Greifstellung 46 zu verlagern. Dazu kann die Steuerungseinrichtung 114 beispielsweise Steuersignale an die Antriebseinrichtungen 62, 64 des Endeffektors senden.

Des Weiteren kann die Steuerungseinrichtung 114 den Roboter 100 steuern um den Endeffektor 10 in dem Isolator 112 zu bewegen und auszurichten. Dazu kann die Steuerungseinrichtung 114 beispielsweise Steuersignale an die entsprechenden Antriebseinrichtungen des Roboters 100 senden.

Das System kann des Weiteren eine Sensoreinrichtung 116 aufweisen. Die Sensoreinrichtung 116 ist dazu ausgebildet, die Position und Ausrichtung des Endeffektors 10 sowie der Objekte 40, 42 in dem Isolator 112 zu erfassen. Die Sensoreinrichtung 116 sendet Sensorsignale an die Steuerungseinrichtung 114, wobei die Sensorsignale Informationen über die erfasste Position und Ausrichtung des Endeffektors 10 sowie der Objekte 40, 42 in dem Isolator 112 enthalten. Die Steuerungseinrichtung 114 ist dazu ausgebildet, den Roboter 100 und den Endeffektor 10 auf Basis der Sensorsignale zu steuern.

Im Folgenden wird ein exemplarischer Prozess zum Handhaben des ersten Objekts 40 in dem Isolator 112 beschrieben. Die Steuerungseinrichtung 114 steuert den Endeffektor 10 derart, dass die erste Aufnahme 12 in der Aufnahmestellung 44 angeordnet ist bzw. in diese verlagert wird. Die Steuerungseinrichtung 114 steuert den Roboter 100 derart, dass der Endeffektor 10 im Isolator 112 zu der Position des ersten Objekts 40 bewegt wird. Insbesondere wird der Endeffektor 10 dabei so bewegt werden, dass das erste Objekt 40 in die erste Aufnahme 12 aufgenommen werden kann. In anderen Worten wird der Endeffektor 10 im Isolator 112 so bewegt und ausgerichtet, dass das erste Objekt 40 in der ersten Aufnahme 12 angeordnet ist.

Sobald das erste Objekt 40 in der ersten Aufnahme 12 angeordnet ist, steuert die Steuerungseinrichtung 114 den Endeffektor 10 derart, dass die erste Aufnahme 12 in die Greifstellung 46 verlagert wird, um das erste Objekt 40 zu greifen. Die Steuerungseinrichtung 114 steuert dann den Roboter 100 derart, dass der Roboter 100 den Endeffektor 10 im Isolator 112 weiter bewegt, wodurch das in der ersten Aufnahme 12 gegriffene erste Objekt 40 im Isolator 112 zu einer Zielposition transferiert werden kann.

Sobald die Zielposition erreicht ist, steuert die Steuerungseinrichtung 114 den Endeffektor 10 derart, dass die erste Aufnahme 12 von der Greifstellung 46 in die Aufnahmestellung 44 verlagert wird, um das erste Objekt 40 wieder freizugeben. Entsprechend kann auch das zweite Objekt 42 in der zweiten Aufnahme 14 aufgenommen, gegriffen, transferiert und wieder freigegeben werden.

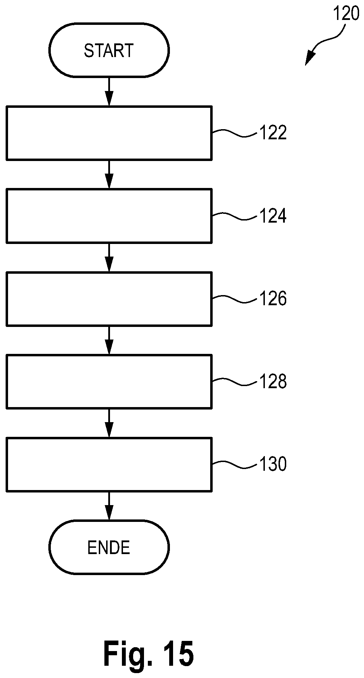

Fig. 15 zeigt eine Ausführungsform eines Verfahrens 120 zum Handhaben von Objekten 40, 42 in dem Isolator 112. Das Verfahren kann von dem zuvor beschriebenen dem System 110 aus Fig. 14 ausgeführt werden.

In einem ersten Schritt 122 des Verfahrens 120 wird die erste Aufnahme 12 oder die zweite Aufnahme 14 in der Aufnahmestellung 44 angeordnet, in der das erste Objekt 40 oder zweite Objekt 42 in der entsprechenden Aufnahme 12, 14 aufgenommen werden kann. Wenn der Endeffektor 10 zwei erste Aufnahmen 12', 12" aufweist, werden beide erste Aufnahmen 12', 12" in der Aufnahmestellung 44 angeordnet.

In einem weiteren Schritt 124 des Verfahrens 120 wird das jeweilige Objekt 40, 42 in der entsprechenden Aufnahme 12, 14 aufgenommen. Wenn der Endeffektor 10 zwei erste Aufnahmen 12', 12" aufweist, kann in jeder ersten Aufnahme 12', 12" ein erstes Objekt 40', 40" aufgenommen werden.

In einem weiteren Schritt 126 des Verfahrens 120 wird das jeweilige Objekt 40, 42 gegriffen, indem das Verlagerungselement 16 derart verlagert wird, dass die entsprechende Aufnahme 12, 14 von der Aufnahmestellung 44 in die Greifstellung 46 verlagert wird, in der das jeweilige Objekt 40, 42 gegriffen werden kann. Wenn der Endeffektor 10 zwei erste Aufnahmen 12', 12" aufweist, werden die beiden Verlagerungselemente 16', 16" derart verlagert wird, dass die erste Aufnahmen 12', 12" oder die zweite Aufnahme 14 von der Aufnahmestellung 44 in die Greifstellung 46 verlagert werden, je nachdem ob zwei erste Objekte 40', 40" oder ein zweites Objekt 42 gegriffen werden sollen.

In einem weiteren Schritt 128 des Verfahrens 120 wird das jeweilige Objekt 40, 42 gehandhabt, indem der Endeffektor 10 mittels des Roboters 100 im Isolator 112 bewegt wird, während das jeweilige Objekt 40, 42 gegriffen ist. Beispielsweise kann der Endeffektor 10 dabei im Isolator 112 derart bewegt und ausgerichtet werden, dass das jeweilige Objekt 40, 42 zu einer Zielposition transferiert wird.

In einem optionalen Schritt 130 des Verfahrens 120 wird das jeweilige Objekt 40, 42 wieder freigegeben, indem das Verlagerungselement 16 derart verlagert wird, dass die entsprechende Aufnahme 12, 14 von der Greifstellung 46 in die Aufnahmestellung 44 verlagert wird. Wenn der Endeffektor 10 zwei erste Aufnahmen 12', 12" aufweist, werden die beiden Verlagerungselemente 16', 16" derart verlagert wird, dass die erste Aufnahmen 12', 12" oder die zweite Aufnahme 14 von der Greifstellung 46 in die Aufnahmestellung 44 verlagert werden, je nachdem ob zwei erste Objekte 40', 40" oder ein zweites Objekt 42 freigegeben werden sollen.

## Patentansprüche

1. Endeffektor (10) zum Handhaben von Objekten (40, 42) in einem Isolator (112), wobei der Endeffektor (10) eine erste Aufnahme (12) für ein erstes Objekt (40), eine zweite Aufnahme (14) für ein zweites Objekt (42), und ein erstes Verlagerungselement (16) aufweist, wobei die Aufnahmen (12, 14) in einer Längsrichtung (22) auf entgegengesetzten Seiten des Endeffektors (10) angeordnet sind, wobei jede Aufnahme (12, 14) zwischen einer Aufnahmestellung (44), in der das jeweilige Objekt (40, 42) in die entsprechende Aufnahme (12, 14) aufgenommen werden kann, und einer Greifstellung (46), in der das jeweilige Objekt (40, 42) mit der entsprechenden Aufnahme (12, 14) gegriffen werden kann, verlagerbar ist, wobei jede Aufnahme (12, 14) einen ersten Greifabschnitt (26) aufweist, wobei der erste Greifabschnitt (26) der ersten Aufnahme (12) an einem ersten Ende (30) des Verlagerungselements (16) und der erste Greifabschnitt (26) der zweiten Aufnahme (14) an einem entgegengesetzten, zweiten Ende (32) des Verlagerungselements (16) angeordnet ist, wobei das Verlagerungselement (16) derart verlagerbar ist, dass die erste Aufnahme (12) und die zweite Aufnahme (14) jeweils zwischen der Aufnahmestellung (44) und der Greifstellung (46) verlagert werden können, **dadurch gekennzeichnet, dass** der Endeffektor (10) zwei erste Aufnahmen (12', 12") und zwei Verlagerungselemente (16', 16") aufweist, wobei an dem ersten Ende (30', 30") jedes Verlagerungselements (16', 16") der erste Greifabschnitt (26) jeweils einer der ersten Aufnahmen (12', 12") angeordnet ist, wobei an den zweiten, entgegengesetzten Enden (32', 32") der Verlagerungselemente (16', 16") jeweils der erste Greifabschnitt (26) und der zweite Greifabschnitt (28) der zweiten Aufnahme (14) angeordnet sind.

2. Endeffektor (10) nach Anspruch 1, wobei das Verlagerungselement (16) derart verlagerbar ist, dass, wenn die erste Aufnahme (12) in der Aufnahmestellung (44) angeordnet ist, die zweite Aufnahme (14) in der Greifstellung (46) angeordnet ist und, wenn die zweite Aufnahme (14) in der Aufnahmestellung (44) angeordnet ist, die erste Aufnahme (12) in der Greifstellung (46) angeordnet ist.

3. Endeffektor (10) nach Anspruch 1, wobei das Verlagerungselement (16) derart verlagerbar ist, dass, wenn die erste Aufnahme (12) in der Aufnahmestellung (44) angeordnet ist, die zweite Aufnahme (14) in der Aufnahmestellung (44) angeordnet ist und, wenn die zweite Aufnahme (14) in der Greifstellung (46) angeordnet ist, die erste Aufnahme (12) in der Greifstellung (46) angeordnet ist.

4. Endeffektor (10) nach einem der Ansprüche 1 bis 3, wobei jede Aufnahme (12, 14) einen zweiten Greifabschnitt (28) aufweist, wobei der erste Greifabschnitt (26) und der zweite Greifabschnitt (28) in einer Querrichtung (24) gegenüberliegend angeordnet sind, insbesondere wobei die Längsrichtung (22) im Wesentlichen senkrecht zur Querrichtung (24) angeordnet ist.

5. Endeffektor (10) nach einem der Ansprüche 1 bis 4, wobei das Verlagerungselement (16) translatorisch oder rotatorisch verlagerbar ist.

6. Endeffektor (10) nach Anspruch 5, wobei das Verlagerungselement (16) in der Querrichtung (24) verschiebbar ist.

7. Endeffektor (10) nach Anspruch 5, wobei das Verlagerungselement (16) um eine erste Drehachse (38) drehbar gelagert ist, wobei die erste Drehachse (38) senkrecht zu der Längsrichtung (22) und der Querrichtung (24) angeordnet ist, insbesondere wobei die erste Drehachse (38) zwischen dem ersten Ende (30) und zweiten Ende (32) angeordnet ist.

8. Endeffektor (10) nach einem der Ansprüche 4 bis 7, wobei der Endeffektor (10) des Weiteren für mindestens eine der Aufnahmen (12, 14) ein Lagerelement (18, 20) aufweist, wobei der zweite Greifabschnitt (28) der jeweiligen Aufnahme an einem Ende (34, 36) des entsprechenden Lagerelements (18, 20) angeordnet ist.

9. Endeffektor (10) nach Anspruch 8, wobei das Verlagerungselement (16) und das Lagerelement (18, 20) an den entsprechenden Enden (30, 32, 34, 36) jeweils eine Aussparung aufweisen, wobei die Aussparungen die entsprechenden Greifabschnitte (26, 28) ausbilden.

10. Endeffektor (10) nach Anspruch 8 oder 9, wobei das Lagerelement (18, 20) starr oder beweglich an dem Endeffektor (10) angeordnet ist.

11. Endeffektor (10) nach Anspruch 10, wobei das Lagerelement (18, 20), insbesondere translatorisch oder rotatorisch, verlagerbar ist, wobei eine Bewegung des Lagerelements (18, 20) mit der Bewegung des Verlagerungselements (16) gekoppelt ist, so dass beim Verlagern von der Aufnahmestellung (44) in die Greifstellung (46) die Greifanschnitte (26, 28) aufeinander zu bewegt werden und beim Verlagern von der Greifstellung (46) in die Aufnahmestellung (44) die Greifanschnitte (26, 28) voneinander weg bewegt werden.

12. Endeffektor (10) nach einem der Ansprüche 1 bis 11, wobei der Endeffektor (10) des Weiteren eine Antriebseinrichtung (62, 64) zum Verlagern des Verlagerungselements (16) aufweist.

13. Roboter (100) zum Handhaben von Objekten (40, 42) in einem Isolator (112), wobei der Roboter (100) einen Endeffektor (10) nach einem der Ansprüche 1 bis 12 aufweist.

14. System (110) mit einem Isolator (112) und einem in dem Isolator (112) angeordneten Roboter (100) nach Anspruch 13.

15. Verfahren (120) zum Handhaben von Objekten (40, 42) in einem Isolator (112), wobei in dem Isolator (112) ein Roboter (110) mit einem Endeffektor (10) angeordnet ist, wobei der Endeffektor (10) eine erste Aufnahme (12) für ein erstes Objekt (40), eine zweite Aufnahme (14) für ein zweites Objekt (42), und ein erstes Verlagerungselement (16) aufweist, wobei die Aufnahmen (12, 14) in einer Längsrichtung (22) auf entgegengesetzten Seiten des Endeffektors (10) angeordnet sind, wobei jede Aufnahme (12, 14) einen ersten Greifabschnitt (26) aufweist, wobei der erste Greifabschnitt (26) der ersten Aufnahme (12) an einem ersten Ende (30) des Verlagerungselements (16) und der erste Greifabschnitt (26) der zweiten Aufnahme (14) an einem entgegengesetzten, zweiten Ende (32) des Verlagerungselements (16) angeordnet ist, wobei das Verlagerungselement (16) verlagerbar ist, wobei der Endeffektor (10) zwei erste Aufnahmen (12', 12") und zwei Verlagerungselemente (16', 16") aufweist, wobei an dem ersten Ende (30', 30") jedes Verlagerungselements (16', 16") der erste Greifabschnitt (26) jeweils einer der ersten Aufnahmen (12', 12") angeordnet ist, wobei an den zweiten, entgegengesetzten Enden (32', 32") der Verlagerungselemente (16', 16") jeweils der erste Greifabschnitt (26) und der zweite Greifabschnitt (28) der zweiten Aufnahme (14) angeordnet sind, wobei das Verfahren (120) die folgenden Schritte aufweist:
- Anordnen (122) der ersten Aufnahmen (12', 12") oder der zweiten Aufnahme (14) in einer Aufnahmestellung (44), in der das jeweilige erste Objekt (40) oder das zweite Objekt (42) in der entsprechenden Aufnahme (12', 12", 14) aufgenommen werden kann;
- Aufnehmen (124) des jeweiligen Objekts (40, 42) in der entsprechenden Aufnahme (12', 12", 14); und
- Greifen (126) des jeweiligen Objekts (40, 42), indem die Verlagerungselemente (16', 16") derart verlagert werden, dass die entsprechende Aufnahme (12', 12", 14) von der Aufnahmestellung (44) in eine Greifstellung (46) verlagert wird, in der das jeweilige Objekt (40, 42) gegriffen werden kann.

## Claims

1. An end effector (10) for handling objects (40, 42) in an isolator (112), wherein the end effector (10) comprises a first receptacle (12) for a first object (40), a second receptacle (14) for a second object (42), and a first displacement member (16), wherein the receptacles (12, 14) are arranged in a longitudinal direction (22) on opposite sides of the end effector (10), wherein each receptacle (12, 14) is displaceable between a receiving position (44) in which the respective object (40, 42) can be received in the corresponding receptacle (12, 14) and a gripping position (46) in which the respective object (40, 42) can be gripped by the corresponding receptacle (12, 14), wherein each receptacle (12, 14) has a first gripping portion (26), wherein the first gripping portion (26) of the first receptacle (12) is located at a first end (30) of the displacement member (16) and the first gripping portion (26) of the second receptacle (14) is located at an opposite, second end (32) of the displacement member (16), wherein the displacement member (16) is displaceable such that the first receptacle (12) and the second receptacle (14) can each be displaced between the receiving position (44) and the gripping position (46), **characterized in that** the end effector (10) comprises two first receptacles (12', 12") and two displacement members (16', 16"), wherein, at the first end (30', 30") of each displacement member (16', 16"), the first gripping portion (26) of a respective one of the first receptacles (12', 12") is arranged, wherein the respective first gripping portion (26) and the second gripping portion (28) of the second receptacle (14) are arranged at the second, opposite ends (32', 32") of the displacement members (16', 16").

2. The end effector (10) of claim 1, wherein the displacement member (16) is displaceable such that when the first receptacle (12) is disposed in the receiving position (44), the second receptacle (14) is disposed in the gripping position (46), and when the second receptacle (14) is disposed in the receiving position (44), the first receptacle (12) is disposed in the gripping position (46).

3. The end effector (10) of claim 1, wherein the displacement member (16) is displaceable such that when the first receptacle (12) is disposed in the receiving position (44), the second receptacle (14) is disposed in the receiving position (44), and when the second receptacle (14) is disposed in the gripping position (46), the first receptacle (12) is disposed in the gripping position (46).

4. The end effector (10) according to any one of claims 1 to 3, wherein each receptacle (12, 14) comprises a second gripping portion (28), wherein the first gripping portion (26) and the second gripping portion (28) are arranged opposite each other in a transverse direction (24), in particular wherein the longitudinal direction (22) is arranged substantially perpendicular to the transverse direction (24).

5. The end effector (10) according to any one of claims 1 to 4, wherein the displacement member (16) is translationally or rotationally displaceable.

6. The end effector (10) according to claim 5, wherein the displacement member (16) is displaceable in the transverse direction (24).

7. The end effector (10) according to claim 5, wherein the displacement member (16) is rotatably supported about a first axis of rotation (38), wherein the first axis of rotation (38) is arranged perpendicular to the longitudinal direction (22) and the transverse direction (24), in particular wherein the first axis of rotation (38) is arranged between the first end (30) and second end (32).

8. The end effector (10) according to any one of claims 4 to 7, wherein the end effector (10) further comprises, for at least one of the receptacles (12, 14), a bearing member (18, 20), wherein the second gripping portion (28) of the respective receptacle is arranged at an end (34, 36) of the corresponding bearing member (18, 20).

9. The end effector (10) of claim 8, wherein the displacement member (16) and the bearing member (18, 20) each have a recess at the respective ends (30, 32, 34, 36), the recesses forming the respective gripping portions (26, 28).

10. The end effector (10) according to claim 8 or 9, wherein the bearing member (18, 20) is rigidly or movably arranged on the end effector (10).

11. The end effector (10) according to claim 10, wherein the bearing member (18, 20) is displaceable, in particular translationally or rotationally, wherein a movement of the bearing member (18, 20) is coupled to the movement of the displacement member (16), so that when displacing from the receiving position (44) into the gripping position (46) the gripping portions (26, 28) are moved towards each other and when displacing from the gripping position (46) into the receiving position (44) the gripping portions (26, 28) are moved away from each other.

12. The end effector (10) according to any one of claims 1 to 11, wherein the end effector (10) further comprises a drive device (62, 64) for displacing the displacement member (16).

13. A robot (100) for handling objects (40, 42) in an isolator (112), the robot (100) comprising an end effector (10) according to any one of claims 1 to 12.

14. A system (110) comprising an isolator (112) and a robot (100) disposed in the isolator (112), wherein the robot (100) is a robot (100) according to claim 13.

15. A method (120) for handling objects (40, 42) in an isolator (112), wherein a robot (110) having an end effector (10) is disposed in the isolator (112), the end effector (10) having a first receptacle (12) for a first object (40), a second receptacle (14) for a second object (42), and a first displacement member (16), wherein the receptacles (12, 14) are disposed on opposite sides of the end effector (10) in a longitudinal direction (22), wherein each receptacle (12, 14) has a first gripping portion (26), wherein the first gripping portion (26) of the first receptacle (12) is disposed at a first end (30) of the displacement member (16) and the first gripping portion (26) of the second receptacle (14) is disposed at an opposite, second end (32) of the displacement member (16), wherein the displacement member (16) is displaceable, wherein the end effector (10) comprises two first receptacles (12', 12") and two displacement members (16', 16"), wherein, at the first end (30', 30") of each displacement member (16', 16"), the first gripping portion (26) of a respective one of the first receptacles (12', 12") is arranged, wherein the respective first gripping portion (26) and the second gripping portion (28) of the second receptacle (14) are arranged at the second, opposite ends (32', 32") of the displacement members (16', 16"), the method (120) comprising the steps of:
- Arranging (122) the first receptacle (12', 12") or the second receptacle (14) in a receiving position (44) in which the first object (40) or the second object (42) can be received in the corresponding receptacle (12', 12", 14);
- Receiving (124) the respective object (40, 42) in the corresponding receptacle (12', 12", 14); and
- Gripping (126) the respective object (40, 42) by displacing the displacement member (16', 16") in such a way that the corresponding receptacle (12', 12", 14) is displaced from the receptacle position (44) into a gripping position (46) in which the respective object (40, 42) can be gripped.

## Revendications

1. Effecteur terminal (10) permettant de manipuler des objets (40, 42) dans un isolateur (112),
dans lequel l'effecteur terminal (10) présente un premier réceptacle (12) pour un premier objet (40), un second réceptacle (14) pour un second objet (42), et un premier élément de déplacement (16), dans lequel les réceptacles (12, 14) sont disposés dans une direction longitudinale (22) sur des côtés opposés de l'effecteur terminal (10), dans lequel chaque réceptacle (12, 14) peut être déplacé entre une position de réception (44), dans laquelle l'objet (40, 42) respectif peut être reçu dans le réceptacle (12, 14) correspondant, et une position de préhension (46), dans laquelle l'objet (40, 42) respectif peut être saisi par le réceptacle (12, 14) correspondant, dans lequel chaque réceptacle (12, 14) présente une première section de préhension (26), dans lequel la première section de préhension (26) du premier réceptacle (12) est disposée à une première extrémité (30) de l'élément de déplacement (16) et la première section de préhension (26) du second réceptacle (14) est disposée à une seconde extrémité (32) opposée de l'élément de déplacement (16), dans lequel l'élément de déplacement (16) peut être déplacé de telle sorte que le premier réceptacle (12) et le second réceptacle (14) peuvent être déplacés respectivement entre la position de réception (44) et la position de préhension (46),
**caractérisé en ce que** l'effecteur terminal (10) présente deux premiers réceptacles (12', 12") et deux éléments de déplacement (16', 16"), dans lequel la première section de préhension (26) de respectivement l'un des premiers réceptacles (12', 12") est disposée à la première extrémité (30', 30") de chaque élément de déplacement (16', 16"), dans lequel respectivement la première section de préhension (26) et la seconde section de préhension (28) du second réceptacle (14) sont disposées aux secondes extrémités (32', 32") opposées des éléments de déplacement (16', 16").

2. Effecteur terminal (10) selon la revendication 1, dans lequel l'élément de déplacement (16) peut être déplacé de telle sorte que, lorsque le premier réceptacle (12) est disposé dans la position de réception (44), le second réceptacle (14) est disposé dans la position de préhension (46) et, lorsque le second réceptacle (14) est disposé dans la position de réception (44), le premier réceptacle (12) est disposé dans la position de préhension (46).

3. Effecteur terminal (10) selon la revendication 1, dans lequel l'élément de déplacement (16) peut être déplacé de telle sorte que, lorsque le premier réceptacle (12) est disposé dans la position de réception (44), le second réceptacle (14) est disposé dans la position de réception (44) et, lorsque le second réceptacle (14) est disposé dans la position de préhension (46), le premier réceptacle (12) est disposé dans la position de préhension (46).

4. Effecteur terminal (10) selon l'une des revendications 1 à 3, dans lequel chaque réceptacle (12, 14) présente une seconde section de préhension (28), dans lequel la première section de préhension (26) et la seconde section de préhension (28) sont disposées en vis-à-vis dans une direction transversale (24), en particulier dans lequel la direction longitudinale (22) est disposée sensiblement perpendiculairement à la direction transversale (24).

5. Effecteur terminal (10) selon l'une des revendications 1 à 4, dans lequel l'élément de déplacement (16) peut être déplacé en translation ou en rotation.

6. Effecteur terminal (10) selon la revendication 5, dans lequel l'élément de déplacement (16) peut coulisser dans la direction transversale (24).

7. Effecteur terminal (10) selon la revendication 5, dans lequel l'élément de déplacement (16) est monté de manière à pouvoir tourner autour d'un premier axe de rotation (38), dans lequel le premier axe de rotation (38) est disposé perpendiculairement à la direction longitudinale (22) et à la direction transversale (24), en particulier dans lequel le premier axe de rotation (38) est disposé entre la première extrémité (30) et la seconde extrémité (32).

8. Effecteur terminal (10) selon l'une des revendications 4 à 7, dans lequel l'effecteur terminal (10) présente en outre, pour au moins l'un des réceptacles (12, 14), un élément de support (18, 20), dans lequel la seconde section de préhension (28) du réceptacle respectif est disposée à une extrémité (34, 36) de l'élément de support (18, 20) correspondant.

9. Effecteur terminal (10) selon la revendication 8, dans lequel l'élément de déplacement (16) et l'élément de support (18, 20) présentent respectivement un évidement aux extrémités (30, 32, 34, 36) correspondantes, dans lequel les évidements forment les sections de préhension (26, 28) correspondantes.

10. Effecteur terminal (10) selon la revendication 8 ou 9, dans lequel l'élément de support (18, 20) est disposé de manière fixe ou mobile sur l'effecteur terminal (10).

11. Effecteur terminal (10) selon la revendication 10, dans lequel l'élément de support (18, 20) peut être déplacé, en particulier en translation ou en rotation, dans lequel un mouvement de l'élément de support (18, 20) est accouplé au mouvement de l'élément de déplacement (16), de sorte que, lors du déplacement de la position de réception (44) vers la position de préhension (46), les sections de préhension (26, 28) sont mues l'une vers l'autre et, lors du déplacement de la position de préhension (46) vers la position de réception (44), les sections de préhension (26, 28) sont éloignées l'une de l'autre.

12. Effecteur terminal (10) selon l'une des revendications 1 à 11, dans lequel l'effecteur terminal (10) présente en outre un dispositif d'entraînement (62, 64) permettant de déplacer l'élément de déplacement (16).

13. Robot (100) permettant de manipuler des objets (40, 42) dans un isolateur (112), dans lequel le robot (100) présente un effecteur terminal (10) selon l'une des revendications 1 à 12.

14. Système (110) comportant un isolateur (112) et un robot (100) selon la revendication 13 disposé dans l'isolateur (112).

15. Procédé (120) permettant de manipuler des objets (40, 42) dans un isolateur (112), dans lequel un robot (110) comportant un effecteur terminal (10) est disposé dans l'isolateur (112), dans lequel l'effecteur terminal (10) présente un premier réceptacle (12) pour un premier objet (40), un second réceptacle (14) pour un second objet (42), et un premier élément de déplacement (16), dans lequel les réceptacles (12, 14) sont disposés dans une direction longitudinale (22) sur des côtés opposés de l'effecteur terminal (10), dans lequel chaque réceptacle (12, 14) présente une première section de préhension (26), dans lequel la première section de préhension (26) du premier réceptacle (12) est disposée à une première extrémité (30) de l'élément de déplacement (16) et la première section de préhension (26) du second réceptacle (14) est disposée à une seconde extrémité (32) opposée de l'élément de déplacement (16), dans lequel l'élément de déplacement (16) peut être déplacé, dans lequel l'effecteur terminal (10) présente deux premiers réceptacles (12', 12") et deux éléments de déplacement (16', 16"), dans lequel la première section de préhension (26) de respectivement l'un des premiers réceptacles (12', 12") est disposée à la première extrémité (30', 30") de chaque élément de déplacement (16', 16"), dans lequel respectivement la première section de préhension (26) et la seconde section de préhension (28) du second réceptacle (14) sont disposées aux secondes extrémités (32', 32") opposées des éléments de déplacement (16', 16"), dans lequel le procédé (120) présente les étapes suivantes :
- disposition (122) des premiers réceptacles (12', 12") ou du second réceptacle (14) dans une position de réception (44), dans laquelle le premier objet (40) ou le second objet (42) respectif peut être reçu dans le réceptacle (12', 12", 14) correspondant ;
- réception (124) de l'objet (40, 42) respectif dans le réceptacle (12', 12", 14) correspondant ; et
- saisie (126) de l'objet (40, 42) respectif en déplaçant les éléments de déplacement (16', 16") de telle sorte que le réceptacle (12', 12", 14) correspondant est déplacé de la position de réception (44) vers une position de préhension (46), dans laquelle l'objet (40, 42) respectif peut être saisi.
